(19) Europäisches Patentamt
European Patent Office
Office européen des brevets

(11) **EP 3 055 116 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(21) Anmeldenummer: **14781152.5**

(22) Anmeldetag: **02.10.2014**

(51) Int Cl.:
**B29C 45/77** *(2006.01)*   **B29C 45/76** *(2006.01)*

(86) Internationale Anmeldenummer:
**PCT/EP2014/071159**

(87) Internationale Veröffentlichungsnummer:
**WO 2015/052072 (16.04.2015 Gazette 2015/15)**

(54) **VERFAHREN ZUR PROZESSFÜHRUNG EINES FORMFÜLLVORGANGS EINER SPRITZGIESSMASCHINE**

METHOD FOR CONTROLLING A MOLD FILLING PROCESS OF AN INJECTION-MOLDING MACHINE

PROCÉDÉ DE GUIDAGE DU PROCESSUS D'UN CYCLE DE REMPLISSAGE D'UN MOULE D'UNE MACHINE DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2013 DE 102013111257**

(43) Veröffentlichungstag der Anmeldung:
**17.08.2016 Patentblatt 2016/33**

(73) Patentinhaber: **KraussMaffei Technologies GmbH 80997 München (DE)**

(72) Erfinder:
• **SCHIFFERS, Reinhard, Dr. 80636 München (DE)**
• **MOSER, Stefan 85399 Hallbergmoos (DE)**
• **KRUPPA, Stefan 81541 München (DE)**

(74) Vertreter: **Wilhelm, Ludwig KraussMaffei Group GmbH Krauss-Maffei-Strasse 2 80997 München (DE)**

(56) Entgegenhaltungen:
**US-A- 5 062 785    US-A1- 2007 168 079**

EP 3 055 116 B1

## Beschreibung

Die Erfindung betrifft ein Verfahren zur Prozessführung eines Formfüllvorganges einer Spritzgießmaschine nach dem Oberbegriff des Anspruchs 1.

Aus dem Stand der Technik sind Ansätze bekannt, einzelne Prozessschwankungen, die negativen Einfluss auf den Formfüllvorgang einer Spritzgießmaschine haben und durch Störeinflüsse erzeugt werden, zu kompensieren.

Aus der EP 2 583 811 A1 ist ein Verfahren zur Quantifizierung von Prozessschwankungen bei einem Einspritzvorgang einer Spritzgießmaschine bekannt. Dieses Verfahren nutzt Referenzkurven von charakteristischen Größen entlang eines Weges bzw. einer Vielzahl von Positionen (x), die eine Einspritzvorrichtung einer Spritzgießmaschine beim Einspritzvorgang überstreicht. Die charakteristischen Größen können dabei Druckwerte, z. B. ein Einspritzdruck, ein Schmelzedruck, ein Forminnendruck oder eine Forminnentemperatur sein. Während eines Einspritzvorganges wird zumindest eine der charakteristischen Größen für eine Vielzahl von Positionen der Einspritzvorrichtung gemessen, so dass sich eine Messfunktion ergibt. Des Weiteren nutzt das in dieser Schrift offenbarte Verfahren wenigstens eine mathematische Transformation, mittels der die in der Messung ermittelte Messfunktion bestmöglich auf die Referenzfunktion der charakteristischen Größe abgebildet wird. Hierzu nutzt das Verfahren einen frei wählbaren Transformationsparameter, der so bestimmt wird, dass eine sich aus der Messfunktion ergebende Bildfunktion bezüglich eines vorbestimmten Fehlermaßes bestmöglich mit der Referenzfunktion übereinstimmt. Dem Transformationsparameter ist eine Prozessschwankung zugeordnet. Die Prozessschwankung wird in Bezug auf die Referenzfunktion unter Verwendung des zumindest einen Transformationsparameters quantifiziert. Als mögliche Prozessschwankungen werden u. a. Schwankungen des Schussvolumens und Schwankungen des Druckbedarfs zur Füllung einer Kavität angegeben.

Aus der DE 35 24 310 C1 ist es bekannt zum geregelten Betreiben von Kunststoffspritzgießmaschinen die Einspritzarbeit zur Führung des Spitzgießprozesses heranzuziehen. Ziel ist es dabei, eine Bewegung der Schnecke, beispielsweise einer ersten Schnecke A und einer zweiten Schnecke B mit unterschiedlichen Schneckencharakteristika bei stets gleicher Einspritzdauer geregelt zu bewegen. Ein Endwert für den Schneckenweg und das Nachdruckprofil werden abgespeichert und für einen Anpassungsfaktor herangezogen. Eine Prozessführung über die Einspritzarbeit hat allerdings den Nachteil, dass sie stark durch Unregelmäßigkeiten in der Anlaufphase des Einspritzvorganges gekennzeichnet ist und ein ungleichmäßiges Schließverhalten einer Rückstromsperre nicht kompensieren kann.

Aus der DE 10 2007 061 775 A1 ist ein Verfahren bekannt, bei dem während der Nachdruckphase eines Spritzgussvorganges der zeitliche Verlauf des Werkzeuginnendrucks gemessen wird. Aus diesem zeitlichen Verlauf des Werkzeuginnendruckes wird mindestens eine nicht-zeitabhängige Kenngröße ermittelt, bei dem diese oder jede Kenngröße mit einem hinterlegten Kenngrößen-Soll-Wert verglichen wird und bei dem anhand des Vergleichsergebnisses automatisch ein angepasster Nachdruckwert für einen nachfolgenden Spritzgussvorgang ermittelt wird. Bei diesem Verfahren wird also in einem vorangehenden Spritzgussvorgang für einen nachfolgenden Spritzgussvorgang gelernt, wobei eine Korrektur eines sich verändernden Kenngrößenwertes im Rahmen einer Nachdruckanpassung erfolgt.

Aus der DE 10 2005 032 367 A1 wird ein Ansatz dahingehend verfolgt, dass die Zeit, welche die Schmelze beim Einspritzvorgang bis zu einem Sensor in der Kavität benötigt, überwacht wird und bei für zu groß erachteten Änderungen bzw. Unterschieden in dieser Zeit die Viskosität der Schmelze angepasst wird. Zur Anpassung der Viskosität wird vorgeschlagen, die Temperatur der Schmelze zu verändern. Dieses Verfahren nutzt die Erkenntnis, dass die Fließgeschwindigkeit der Schmelze durch eine Viskositätsveränderung der Schmelze veränderbar ist.

Derartige Ansätze aus den erwähnten Druckschriften zur Kompensierung von Störeinflüssen beziehen sich oft auf eine Referenzkurve einer oder mehrerer Prozessgrößen. Dies hat nachteiliger Weise zur Folge, dass permanent ein Abgleich zu einer Referenz stattfinden muss. Dies zieht oft weitere manuelle Korrekturen nach sich, wenn sich die Produktionsbedingungen, z. B. die Umgebungsbedingungen oder die Materialbeschaffenheiten des zu verarbeitenden Kunststoffes über ein bestimmtes Maß hinaus ändern. Außerdem erscheinen zumindest einige der genannten Ansätze kompliziert und hinsichtlich ihrer technischen Realisierbarkeit aufwändig und kostenintensiv.

Aufgabe der Erfindung ist es daher, ein Verfahren zur Prozessführung des Formfüllvorganges einer Kavität eines Werkzeuges einer Spritzgießmaschine anzugeben, bei dem die Kavität individuell volumetrisch korrekt gefüllt wird. Des Weiteren soll ein derartiges Verfahren angegeben werden, welches es ermöglicht, noch im laufenden Einspritzvorgang auf diesen laufenden Einspritzvorgang derart einzuwirken, dass eine volumetrisch korrekte Füllung der Kavität erfolgt.

Das erfindungsgemäße Verfahren soll außerdem sich über einen Produktionszeitraum ändernde Materialeigenschaften aufgrund von Umwelteinflüssen, wie z. B. Hallentemperaturen oder Luftfeuchtigkeiten oder Chargenschwankungen des zu verwendenden Materials ausgleichen können. Ebenfalls wird ein Anfahren und Wiederanfahren von Spritzgießprozessen erleichtert.

Diese Aufgaben werden mit einem Verfahren mit den Merkmalen des Anspruchs 1 gelöst. Vorteilhafte Ausführungsformen sind in den Unteransprüchen 2 bis 15 angegeben.

Das erfindungsgemäße Verfahren zur volumetrisch korrekten Füllung einer Kavität eines Formwerkzeuges mit einer Schmelze eines zu verarbeitenden Materials in einem Spritzgießprozess weist eine Lernphase und eine Produktionsphase auf, wobei in der Lernphase zumindest die nachfolgenden Schritte 1 bis 5 und in der Produktionsphase zumindest die nachfolgenden Schritte 6 bis 8 durchgeführt werden. Die Schritte der Lernphase sind:

1. Bereitstellen einer mit einem Formwerkzeug bestückten Spritzgießmaschine wobei die Spritzgießmaschine zur Herstellung eines Gutteils in einer Kavität des Formwerkzeuges eingerichtet ist,

2. Durchführen mindestens eines Lernspritzgießzyklus zum Erhalt eines Gutteils und Aufnehmen eines zum Massedruckverlauf korrelierenden Druckverlaufes $p_{LMasse}(t)$

3. Ermittlung eines Viskositätsindexes ($VI_L$), der die Schmelze des Lernspritzgießzyklus charakterisiert, während der Einspritzphase (EL) des Lernspritzgießzyklus oder während einer dem Lernspritzgießzyklus vorangehenden Plastifizierphase (PL),

4. Ermitteln eines Füllindexes ($FI_L$) als Kennzahl für die volumetrisch korrekte Füllung der Kavität des Gutteils im Lernspritzgießzyklus, wobei gilt

$$FI_L = \int_{t(s=CP_L)}^{t(s=COP_L)} p_{LMasse}(t)\ dt,$$

wobei $t(s=COP_L)$ der Zeitpunkt an der Schneckenposition ($s=COP_L$) des Umschaltpunktes ($COP_L$) im Lernspritzgießzyklus ist und $t(s=CP_L)$ der Zeitpunkt ist, an dem die Schneckenposition ($s=CP_L$) eine Position erreicht hat, an der ein vordefinierter Druck $p_{LMasse}(t) = p_{CP}$ vorliegtoder eine Position erreicht hat, an der die Füllung der Kavität beginnt, wobei gilt:

$$s{=}CP_L \ > \ s{=}COP_L$$

5. Bildung eines Formteil-Volumen-Äquivalents

$$MPV_{eq} = FI_L/VI_L.$$

Die Schritte der Produktionsphase sind:

6. Durchführen einer Vielzahl von ProduktionsSpritzgießzyklen mit dem Formwerkzeug, Aufnehmen zumindest eines zum Massedruckverlauf korrelierenden Druckverlaufes $p_{PMasse}(t)$ wobei ein Viskositätsindex ($VI_P$), der die Schmelze des aktuellen Produktionsspritzgießzyklus charakterisiert, während der Einspritzphase (EP) des Produktionsspritzgießzyklus oder während einer dem Produktionsspritzgießzyklus vorangehenden Plastifizierphase (PL),

7. nach der Ermittlung des Viskositätsindexes ($VI_P$) der erforderliche Füllindex ($FI_P$) für den aktuellen Produktionsspritzgießzyklus aus

$$FI_P{=}MPV_{eq}{*}VI_P$$

berechnet wird und

8. ein Umschaltpunkt ($COP_P$) des Produktionsspritzgießzyklus und/oder ein Einspritzgeschwindigkeitsprofil während der verbleibenden Einspritzphase (EP) derart angepasst wird, dass gilt,

$$FI_P = \int_{t(s=CP_P)}^{t(s=COP_P)} p_{PMasse}(t)\ dt = MPVeq * VI_P$$

Erfindungsgemäß wurde demnach erkannt, dass eine volumetrisch korrekte Füllung einer Kavität dann erreichbar ist, wenn ein in einer Lernphase ermitteltes Formteil-Volumen-Äquivalent $MPV_{eq}$ auch in Zyklen der Produktionsphase erreicht wird. Das Formteil-Volumen-Äquivalent $MPV_{eq}$ wird dabei in einer Lernphase als ein Quotient aus einem Füllindex $FI_L$ und einem Viskositätsindex $VI_L$, die beide in einem Lernzyklus ermittelt werden, gebildet. Der Viskositätsindex $VI_L$ des Lernspritzzyklus charakterisiert dabei die Schmelze, d. h. die Schmelzeeigenschaften des im Lernspritzgießzyklus verwendeten Materials zu den im Lernspritzgießzyklus vorliegenden Umgebungs- und sonstigen Betriebsbedingungen der Spritzgießmaschine beim Herstellen des Gutteils. Dabei kann die Ermittlung des Viskositätsindexes $VI_L$ während der Einspritzphase EL des Lernspritzgießzyklus oder während einer dem Lernspritzgießzyklus vorangehenden Plastifizierphase PL erfolgen. Der Füllindex $FI_L$ stellt dabei eine Kennzahl für eine volumetrisch korrekte Formfüllung eines Gutteils im Lernspritzgießzyklus dar und wird als Druckintegral des Druckverlaufes $p_{LMasse}(t)$ zwischen den Zeitgrenzen $t(s=CP_L)$ und $t(s=COP_L)$ berechnet.

In der Produktionsphase wird dann ausgehend von der Erkenntnis, dass das Formteil-Volumen-Äquivalent $MPV_{eq}$ des Lernspritzgießzyklus auch im Produktionsspritzgießzyklus konstant zu halten ist, der Viskositätsindex $VI_P$ z. B. während des Produktionsspritzgießzyklus ermittelt. Dieser Viskositätsindex $VI_P$ charakterisiert dabei die Schmelze des aktuellen Produktionsspritzzyklus. Dies kann analog zur Lernphase wiederum während der Einspritzphase (EP) des Produktionsspritzzyklus oder während einer dem Produktionsspritzzyklus vorangehenden Plastifizierphase (PP) geschehen. Somit ist der Wert des Viskositätsindexes $VI_P$ im Produktionsspritzgießzyklus entweder zu einem Zeitpunkt $t(s=MM_{Pos2})$ oder spätestens zu einem Zeitpunkt $t(s=MI_{Pos2})$ berechenbar und somit bekannt. In Kenntnis des für den zu beeinflussenden Produktionsspritzzyklus vorliegenden Viskositätsindexes $VI_P$ kann der erforderliche Füllindex $FI_P$ ermittelt werden, aus der Gleichung

$$FI_P = MPV_{eq} * VI_P.$$

Analog zum Lernprozess kann der erforderliche Füllindex $FI_P$ im Produktionsprozess gemäß der Gleichung

$$FI_P = \int_{t(s=CP_P)}^{t(s=COP_P)} p_{PMasse}(t)\ dt$$

angegeben werden.

Dieses Integral wird seit dem Zeitpunkt $t(s=CP_P)$ für den laufenden und zu beeinflussenden Produktionsspritzgießzyklus aufgenommen. Sobald der Wert dieses Integrals den Wert des erforderlichen Füllindex $FI_P$ erreicht hat, wird mittels der Maschinensteuerung von der Einspritzphase EP in die Nachdruckphase NP umgeschaltet. Dieser Zeitpunkt stellt dann somit die obere Integrationsgrenze $t(s=COP_P)$, also den Zeitpunkt an dem umgeschaltet wird, dar. Die zugehörige Schneckenposition $s=COP_P$ entspricht der Schneckenposition s des Umschaltpunktes $COP_P$ des aktuellen Produktionsspritzgießzyklus.

Im Ergebnis wird also der jeweilige Produktionsspritzgießzyklus individuell anhand des für diesen Produktionsspritzgießzyklus ermittelten erforderlichen Füllindex $FI_P$ geführt. Aus dieser individuellen Führung des Produktionsspritzgießzyklus anhand des zu erreichenden Wertes für $FI_P$ ergeben sich individuelle Umschaltpunkte $COP_P$ für jeden Produktionsspritzgießzyklus.

Wie oben beschrieben, kann die Ermittlung des Viskositätsindex $VI_P$ für den aktuellen Produktionsspritzgießzyklus entweder der Einspritzphase EP oder während einer dem Produktionsspritzgießzyklus vorangehenden Plastifizierphase PP vorgenommen werden.

Sofern der Viskositätsindex $VI_P$ während einer vorangehenden Plastifizierphase PP ermittelt wird, steht der Wert für den erforderlichen Füllindex $FI_P$ des aktuellen Produktionsspritzgießzyklus bereits vor Beginn der Einspritzphase EP fest. Die Integration betreffend den Füllindex $FI_P$ beginnt zum Zeitpunkt $t(s=CP_P)$, welcher ein Zeitpunkt während der Einspritzphase EP ist. Für die praktische Anwendung folgt hieraus, dass ab dem Integrationsstartpunkt $t(s=CP_P)$ die gesamte restliche Einspritzphase EP des Produktionsspritzgießzyklus zur Beeinflussung zur Verfügung steht.

Wird der Viskositätsindex $VI_P$ des aktuellen Produktionsspritzgießzyklus während der Einspritzphase EP des aktuellen Produktionsspritzgießzyklus ermittelt, was - wie nachfolgend beschrieben - mittels einer Integration in einem Messintervall MI des Druckverlaufes $p_{PMasse}(t)$ erfolgt und zeitlich überlappend zur integrativen Ermittlung des Füllindexes $FI_P$ stattfindet, so steht in diesem Fall der für den aktuellen Produktionsspritzgießzyklus zugrunde zulegende Viskositätsindex $VI_P$ erst nach Abschluss der Integration betreffend den Viskositätsindex $VI_P$ fest. Frühestens zu diesem Zeitpunkt kann der erforderliche Füllindex $FI_P$ ermittelt werden. Somit steht in diesem Fall nach der Ermittlung des Viskositätsindexes $VI_P$ noch der Rest der verbleibenden Einspritzphase EP zur Beeinflussung des Produktionsspritzgießzyklus mit dem Ziel der Erreichung des erforderlichen Füllindexes $FI_P$ zur Verfügung. Dies hat sich in der Praxis als ausreichend erwiesen.

Ein Vorteil bei der zuletzt genannten Möglichkeit ist, dass der Viskositätsindex $VI_P$, wenn er in der Einspritzphase EP ermittelt wird, eine höhere Genauigkeit besitzt und die Schmelze des aktuellen Produktionsspritzgießzyklus besser charakterisiert als ein Viskositätsindex $VI_P$, der während einer vorangehenden Plastifizierphase PP ermittelt wird.

Zusammenfassend gibt es somit zwei Möglichkeiten um die Gleichung

$$FI_P = MPV_{eq}*VI_P$$

zu erfüllen.

1. Die Prozessführung des Produktionsspritzgießzyklus wird bei einem vorgegebenen Schneckengeschwindigkeitsprofil so lange gefahren, bis der Wert des Integrals

$$FI_P = \int_{t(s=CP_P)}^{t(s=COP_P)} p_{PMasse}(t)\ dt$$

dem aus dem Viskositätsindex $VI_P$ und dem Formteil-Volumen-Äquivalents $MPV_{eq}$ ermittelten erforderlichen Füllindex $FI_P$ entspricht. Bei Erreichen des Wertes für den erforderlichen Füllindex $FI_P$ wird von der Einspritzphase EP in die Nachdruckphase NP umgeschaltet, so dass hieraus ein für jeden Produktionsspritzgießzyklus individueller Umschaltpunkt $COP_P$ resultiert.

2. Alternativ oder zusätzlich kann, wenn die Zeitdauer der verbleibenden Einspritzphase EP noch lange genug ist, auch das Einspritzgeschwindigkeitsprofil angepasst werden, wodurch sich der zeitliche Verlauf des zum Massedruckverlauf korrelierenden Druckverlaufs $p_{PMasse}(t)$ ändert.

Bei der Ermittlung des Viskositätsindexes $VI_L$ oder $VI_P$ während des Lernspritzgießzyklus oder während des Produktionsspritzgießzyklus gibt es mehrere alternative Möglichkeiten.

1. Möglichkeit

Gemäß einer ersten Möglichkeit kann der Viskositätsindex $VI_L$ im Lernspritzgießzyklus während der Einspritzphase EL des Lernspritzgießzyklus als Produkt aus einer Fließzahl $F_{ZEL}$ und einer Korrekturkonstante $K_1$ normiert auf das Maß einer mittleren Einspritzgeschwindigkeit $v_{MI}$ angegeben werden, wobei die Fließzahl $F_{ZEL}$ ein Druckintegral des Druckverlaufes $p_{LMasse}(t)$ innerhalb der Grenzen $t(s=MI_{Pos1})$ und $t(s=M_{IPos2})$ ist. Dabei wird die Schneckenposition $s=MI_{Pos1}$ bevorzugt derart gewählt, dass sie in einem Bereich liegt, in dem die Schneckengeschwindigkeit v nach anfänglichen Beschleunigungseffekten zum ersten Mal einen konstanten Wert erreicht hat. Gegebenenfalls kann zu dieser Position noch ein geeignet großer Sicherheitsabstand $\Delta x_{vComp}$ hinzugerechnet werden, um gegebenenfalls Störungen resultierend aus Einschwingvorgängen ausblenden zu können. Die zweite Position $s=MI_{pos2}$ ist dabei jedenfalls größer als die Position des Umschaltpunktes $COP_L$ im Lernspritzgießzyklus, d. h. die zugeordnete Zeit $t(s=MI_{Pos2})$ ist kleiner als der Zeitpunkt $t(COP_L)$. Die Position $s=MI_{Pos1}$ ist dabei in jedem Fall ein Stück größer als die Position $s=MI_{pos2}$, d. h. die Schnecke erreicht die Position $s=MI_{Pos1}$ früher als die Position $s=MI_{Pos2}$.

Ein so bestimmter Viskositätsindex $VI_L$ kann - wie erfindungsgemäß erkannt wurde - die im Lernspritzzyklus verwendete Schmelze in ausreichender Genauigkeit u. a. hinsichtlich ihrer Viskosität charakterisieren.

2. Möglichkeit:

Alternativ kann hierzu in einer zweiten Möglichkeit der Viskositätsindex $VI_L$ während einer Plastifizierphase (PL) des Lernspritzgießzyklus ermittelt werden. Ein so ermittelter Viskositätsindex $VI_L$ wird als Produkt aus einer Fließzahl $F_{ZPlastL}$, die während der Plastifizierphase PL des Lernspritzzyklus ermittelt wird, und einer Korrekturkonstanten $K_2$ gebildet, wobei dieses Produkt über eine Länge $l_{MM}$ normiert wird. Dabei ist die Fließzahl $F_{ZPlast}$ ein Integral eines Antriebsmoments $M_L(t)$ einer Plastifizierschnecke über der Zeit, wobei die Zeitgrenzen bestimmt werden durch ein Durchlaufen unterschiedlicher Schneckenpositionen s, beispielsweise einer ersten Schneckenposition $s=MM_{pos1}$ und einer zweiten Schneckenposition $s=MM_{Pos2}$. Die beiden Integrationsgrenzen $t(s=MM_{Pos1})$ und $t(s=MM_{Pos2})$ werden derart gewählt, dass das Antriebsmoment $M_L(t)$ in diesem Bereich frei oder nahezu frei von Störeinflüssen, wie z. B. Beschleunigungs- oder Einschwingeffekten ist.

### 3. Möglichkeit:

Die Ermittlung des Viskositätsindexes $VI_P$ erfolgt in analoger Art und Weise zur oben erwähnten Möglichkeit 1 während der Einspritzphase (EP) des Produktionsspritzgießzyklus, wobei die entsprechenden Größen, die oben im Rahmen des Lernspritzgießzyklus erläutert wurden, nunmehr aus dem vorliegenden, der Bestimmung des Viskositätsindexes $VI_P$ zugrundeliegenden Produktionsspritzgießzyklus entnommen werden. Dabei kann analog zur Möglichkeit 1 eine Korrekturkonstante $K_1$ zum Einsatz kommen.

### 4. Möglichkeit:

Die Ermittlung des Viskositätsindexes $VI_P$ kann in einer vierten Möglichkeit analog zur Möglichkeit 2 während der Plastifizierphase PP des Produktionsspritzgießzyklus durchgeführt werden. Dabei werden die Größen, welche zur Ermittlung des Viskositätsindex $VI_L$ herangezogen wurden, analog bei der Bestimmung des Viskositätsindex $VI_P$ im Produktionsspritzgießzyklus ermittelt. Insbesondere ist Basis für die Ermittlung der Fließzahl $F_{PPlast}$ nunmehr das Drehmoment $M_P(t)$ einer Plastifizierschnecke im Produktionsspritzgießzyklus.

Beispielhaft können als die zum Massedruckverlauf korrelierenden Druckverläufe $p_{LMasse}(t)$ und $p_{PMasse}(t)$ ein Einspritzdruckverlauf, Hydraulikdruckverlauf, ein Kavitätsinnendruckverlauf oder ein Massedruckverlauf sein oder aus einem Motordrehmoment eines Einspritzmotors ermittelt werden.

Es hat sich weiterhin als zweckmäßig herausgestellt, in einer Nachdruckphase NP des Produktionsspritzgießzyklus den Nachdruck $p_{NP}$ nach der Formel $p_{NP}=p_N*(1+K_3*(VI_P-VI_L)/VI_L)$ um einen Faktor $VI_P/VI_L$ gegenüber einem voreingestellten Nachdruck $p_N$ zu verändern. Dabei kann eine Korrekturkonstante $K_3$ Eingang finden, welche im Wesentlichen abhängig ist vom herzustellenden Formteil. Ein dünnwandigeres Formteil wird nur eine schwächere Nachdruckanpassung benötigen, während ein dickwandigeres Formteil eher eine stärkere Anpassung benötigt. Beispielsweise können für die Konstante $K_3$ zwei oder mehrere Anpassungsstufen in der Steuerung vorgesehen sein. Von einem Maschinenbediener wird dann anhand der Raumform und/oder der sonstigen Eigenschaften des herzustellenden Formteils die Konstante $K_3$ nach seiner Erfahrung ausgewählt. Beispielsweise bieten sich vier Anpassungsstufen: "schwach", "mittel", "stark", "sehr stark" an, die der Maschinenbediener nach seiner Erfahrung sinnvoll auswählt.

Zweckmäßiger Weise wird die Schneckenposition $s=MI_{Pos2}$ zumindest für den Fall, dass die Viskositätsindizes $VI_P$ jeweils in der Einspritzphase EP des Produktionsspritzgießzyklus ermittelt werden, ausreichend weit vor dem Umschaltpunkt $COP_P$ angeordnet, so dass nach Bestimmung dieses Viskositätsindex $VI_P$ während der noch verbleibenden Zeit, d. h. während des noch verbleibenden Rests der Einspritzphase EP bis zum Umschaltpunkt $COP_P$, durch örtliche Verlagerung des Umschaltpunktes $COP_P$ oder durch Anpassung des Geschwindigkeitsprofils der Schnecke während der verbleibenden Einspritzphase (EP) noch ausreichend Einfluss auf die Höhe des Füllindexes $FI_P$ nehmbar ist, so dass die der Erfindung zugrunde liegende Gleichung $FI_P=MPV_{eq}*VI_P$ erfüllt ist. Hierbei muss dann eine Festlegung der Position $s=MI_{Pos2}$ derart erfolgen, dass ausgehend von dem Umschaltpunkt $COP_L$ des Lernspritzgießzyklus eine betragsmäßig maximal zu erwartende Verlagerung des Umschaltpunktes $COP_P$ in Höhe von $\Delta s_{max}$ berücksichtigt wird und zudem eine Wegstrecke berücksichtigt wird, die während einer erforderlichen Rechenzeit $t_{RZ}$ zur Ermittlung des Füllindexes $FI_P$ nach der Ermittlung des Viskositätsindexes $VI_P$ erforderlich ist.

Zweckmäßig ist, die Schneckenposition $s=CP$ als fest vorgegebenen Wert bei einem vorgegebenen Druck $p_{CP}$ zu definieren oder hieraus zu ermitteln oder hierfür eine Schneckenposition $s$ zu wählen, bei der die Rückstromsperre zuverlässig geschlossen ist. Hierdurch werden Unschärfen, die hinsichtlich des Schmelzetransports in die Kavität bis zum Schließen einer Rückstromsperre auftreten, zuverlässig ausgeblendet.

Als zweckmäßig hat sich erwiesen, den Spritzgießzyklus während der Einspritzphase EP oder EL bis zum Umschaltpunkt $COP_L$ oder $COP_P$ hinsichtlich der Schneckenposition $s$ positionsgeregelt oder positionsgeregelt und druckbegrenzt zu betreiben und nach dem Umschaltpunkt $COP_L$ oder $COP_P$ bis zum Ende der Nachdruckphase NP druckgeregelt zu betreiben.

Z. B. in Abhängigkeit des Schließverhaltens einer Rückstromsperre kann es zu einer Verschiebung der aufgenommenen Druckkurven $p_{LMasse}(t)$ und $p_{PMasse}(t)$ kommen, die nicht auf einer Änderung einer Viskosität der Schmelze und damit auf einer Änderung des Viskositätsindexes $VI_L$, $VI_P$ der Schmelze beruht. Um einen derartigen Fehler auszugleichen, wird in Abhängigkeit des Schließverhaltens der Rückstromsperre ein Messintervall $MI=MI_{Pos1}-MI_{Pos2}$ bei Bedarf örtlich hin zu größeren oder kleineren Schneckenpositionen verschoben. Dabei wird zweckmäßiger Weise das Messintervall MI örtlich hin zu größeren Scheckenpositionen $s$ verschoben, wenn ein vorbestimmter Referenzdruck $p_{Ref}$ im Produktionszyklus örtlich früher durchschritten wird, als im Lernzyklus, d. h. es gilt:

$$s(p_{RefP}) > s(p_{RefL}).$$

Umgekehrt ist es zweckmäßig, dass das Messintervall $MI=MI_{Pos1}-MI_{Pos2}$ hin zu kleineren Schneckenpositionen verschoben wird, wenn ein vorbestimmter Referenzdruck $p_{Ref}$ im Produktionszyklus örtlich später durchschritten wird, als im Lernzyklus, d. h.

$$s(p_{RefP}) < s(p_{RefL}).$$

Weiterhin hat es sich als zweckmäßig erwiesen, den Referenzdruck $p_{Ref}$ kleiner zu wählen, als denjenigen Druck, der bei der Position $MI_{Pos1}$ vorliegt, d. h. einen Referenzdruck $p_{Ref}$ zu wählen, der vor dem Beginn der Ermittlung des Viskositätsindexes $VI_P$ auftritt. Der Referenzdruck $p_{Ref}$ ist dabei ein Punkt auf der aufgenommenen, zum Massedruckverlauf korrelierenden Druckverlaufskurve $p_{PMasse}(t)$ oder $p_{LMasse}(t)$.

Mit dem erfindungsgemäßen Verfahren ist es in weiten Grenzen möglich, in Abhängigkeit des ermittelten Viskositätsindexes $VI_P$ für eine korrekte Formfüllung zu sorgen. Allerdings kann es beispielsweise vorkommen, dass bei der laufenden Ermittlung des Viskositätsindexes $VI_P$ von Produktionszyklus zu Produktionszyklus eine länger laufende Tendenz der Abweichung des Viskositätsindexes $VI_P$ von einem Produktionszyklus zum anderen erkannt wird. In einem solchen Fall kann es zweckmäßig sein, den Viskositätsindex $VI_P$ auch über eine geänderte Einstellung der Schmelzetemperatur, z. B. über die Zylindertemperatur, den Staudruck oder die Plastifizierdrehzahl anzupassen.

Weitere vorteilhafte Ausgestaltungen sind in weiteren Unteransprüchen angegeben.

Im Folgenden wird die Erfindung anhand der Zeichnung beispielhaft näher erläutert. Es zeigen:

Figur 1:    schematisch ein Diagramm eines Lernspritzgießzyklus zur Ermittlung eines Formteil-Volumen-Äquivalents $MPV_{eq}$;

Figur 2:    schematisch das Diagramm gemäß Figur 1, ohne die schraffierte Fläche, die den Füllindex $FI_L$ repräsentiert, anhand dessen eine sinnvolle Möglichkeit erläutert wird, wie Integrationsgrenzen $t(s=MI_{Pos1})$ und $t(s=MI_{Pos2})$ ermittelt werden können;

Figur 3:    schematisch ein Diagramm, anhand dessen eine zweite Möglichkeit zur Ermittlung des Viskositätsindexes $VI_L$ oder $VI_P$ erläutert wird;

Figur 4:    schematisch ein Diagramm, welches einen charakteristischen Druckverlauf $p_{PMasse}(t)$ für ein gegenüber dem Lernspritzgusszyklus höher viskosen Material zeigt, wobei schraffiert eine Fließzahl $F_{ZEP}$ des Materials und der erforderliche Füllindex $FI_P$ dargestellt sind;

Figur 5:    das Diagramm gemäß Figur 4, wobei schraffiert die Fließzahl $F_{ZEP}$ eines gegenüber dem Lernprozess niedrigviskoseren Materials und dessen erforderlicher Füllindex $FI_P$ eingezeichnet sind;

Figur 6:    ein Diagramm, anhand dessen eine Verschiebung eines Messintervalls MI erläutert wird;

Figur 7:    schematisch ein Diagramm über eine Vielzahl von Produktionszyklen, welches die Abhängigkeit des Formteilgewichts vom Viskositätsindex $VI_P$ des eingesetzten Materials bei einem Verfahren gemäß dem Stand der Technik ohne erfindungsgemäße Regelung und bei einem Verfahren gemäß der Erfindung zeigt;

Figur 8:    schematisch ein Diagramm über eine Vielzahl von Produktionszyklen, aus denen hervorgeht, wie sich bei einem sich verändernden Viskositätsindex $VI_P$ des Materials die Umschaltposition $COP_P$ beim erfindungsgemäßen Verfahren ändert und bei einem konventionellen Verfahren gemäß dem Stand der Technik konstant bleibt.

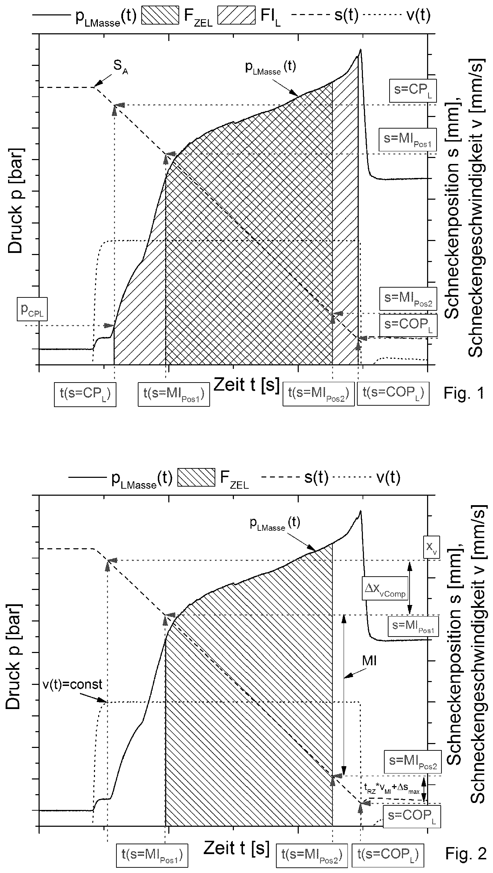

Eine Lernphase des erfindungsgemäßen Verfahrens (Figur 1) geht davon aus, dass eine Spritzgießmaschine, welche mit einem Formwerkzeug bestückt ist, bereitgestellt ist und die Spritzgießmaschine zur Herstellung eines Gutteils in einer Kavität des Formwerkzeugs eingerichtet ist.

Zum besseren Verständnis der nachfolgenden Diagramme wird betont, dass die Schneckenposition $s(t)$ in den Figuren 1, 2 von einer Anfangsposition $s_A$ bis zu der Schneckenposition am Umschaltpunkt $COP_L$ oder $COP_P$, d. h. bei $s=COP_L$ oder $s=COP_P$ abnimmt.

Während der Durchführung eines Lernspritzgießzyklus zum Erhalt eines Gutteils wird ein Druckverlauf $p_{LMasse}(t)$, der zum Massedruckverlauf des Lernspritzgießzyklus korreliert aufgenommen. Die Aufnahme dieses Druckverlaufs erfolgt über der Zeit t. Ergänzend zu diesem Druckverlauf $p_{LMasse}(t)$ ist in Figur 1 mittels der gestrichelten Linie noch die Schneckenposition s (t) und die Schneckengeschwindigkeit v(t) eingezeichnet. Auf der Zeitachse sind charakteristische Zeitpunkte $t(s=CP_L)$, $t(s=MI_{Pos1})$, $t(s=MI_{Pos2})$ und $t(s=COP_L)$ eingezeichnet. Die Fläche unter der Kurve $p_{LMasse}(t)$ innerhalb der Grenzen von $t(s=MI_{Pos1})$ und $t(s=M_{IPos2})$ repräsentiert eine Fließzahl $F_{ZEL}$ der vorliegenden Schmelze und wird bestimmt durch

$$F_{ZEL} = \int_{t(s=MI_{Pos1})}^{t(s=MI_{Pos2})} p_{LMasse}(t)\ dt.$$

Zwischen den Integrationsgrenzen $t(s=MI_{Pos1})$ und $t(s=MI_{Pos2})$ wird ein Mittelwert der Schneckengeschwindigkeit v(t) gebildet. Der Mittelwert ist mit $v_{MI}$ bezeichnet. Die Fließzahl $F_{ZEL}$ normiert mit dem Mittelwert $v_{MI}$ und gegebenenfalls multipliziert mit einer Korrekturkonstante $K_1$ zur Skalierung ergibt den Viskositätsindex $VI_L$, der die Charakteristik der Schmelze des Lernspritzgusszyklus, ermittelt in der Einspritzphase EL, repräsentiert.

Als Kennzahl für die volumetrisch korrekte Formfüllung eines Gutteils im Lernspritzgießzyklus wird ein Füllindex $FI_L$ ermittelt, wobei der Füllindex $FI_L$ der Fläche unter der Kurve $p_{LMasse}(t)$ in den Grenzen von $t(s=CP_L)$ bis $t(s=COP_L)$ entspricht und durch das Integral

$$FI_L = \int_{t(s=CP_L)}^{t(s=COP_L)} p_{LMasse}(t)\ dt$$

ermittelt wird.

Die obere Integrationsgrenze $t(s=COP_L)$ ist dabei die im Lernspritzgießzyklus voreingestellte Position des Umschaltpunktes $COP_L$, der beim Erreichen der Schneckenposition s am Umschaltpunkt der korrespondierende Zeitwert $t(s=COP_L)$ entspricht. Dabei wird erfindungsgemäß davon ausgegangen, dass während der Einspritzphase EL die Formfüllung am Umschaltpunkt $COP_L$ abgeschlossen ist. Eine weitere Formfüllung während der Nachdruckphase NP, die sich der Einspritzphase EP anschließt, wird hierbei außer Acht gelassen. Die untere Integrationsgrenze $t(s=CP_L)$ von der ab die Integration zur Ermittlung des Füllindexes $FI_L$ erfolgt, ist dabei derart festgelegt, dass zum Integrationsbeginn $t(s=CP_L)$ eine effektive Füllung der Kavität des Formwerkzeuges beginnt oder bereits begonnen hat. Dies ist insbesondere dann der Fall, wenn eine eventuell vorhandene Rückstromsperre sicher geschlossen ist. Da die Ermittlung des genauen Schließzeitpunktes der Rückstromsperre technisch aufwändig oder mit einfachen technischen Mitteln nur ungenau möglich ist, kann alternativ hierzu auch ein vorbestimmter Druckwert $p_{CP}$ gewählt werden, bei dem aller Erfahrung nach die effektive Füllung der Kavität begonnen, also ein Schließen der Rückstromsperre bereits stattgefunden hat. Ein solcher Druckwert $p_{CP}=p_{LMasse}(t(s=CP_L))$ ist zweckmäßiger Weise hinsichtlich seiner Größe derart gewählt, dass dieser Druckwert kleiner ist als der Druckwert $p_{LMasse}(t)$ zum Zeitpunkt $t(s=MI_{Pos1})$.

Während des Gutteilzyklus werden die oben beschriebenen beiden Integrale aufgenommen und die hierbei ermittelten Werte des Viskositätsindexes $VI_L$ und des Füllindexes $FI_L$ anschließend zueinander ins Verhältnis gesetzt, wobei dieses Verhältnis $FI_L/VI_L$ das Formteil-Volumen-Äquivalent $MPV_{eq}$ bildet.

Im Folgenden wird anhand der Figur 2 beispielhaft eine Möglichkeit zur Ermittlung der Integrationsgrenzen $t(s=MI_{Pos1})$ und $t(s=MI_{Pos2})$ erläutert. Damit der Viskositätsindex $VI_L$ tatsächlich ein Maß für die Charakteristik der Schmelze im Lernspritzgießzyklus darstellt, muss der Integrationsbeginn $t(s=MI_{Pos1})$ geeignet festgelegt werden. Hierzu muss $s=MI_{Pos1}$ jedenfalls größer sein als $s=MI_{Pos2}$. Damit das Integrationsintervall zwischen $t(s=MI_{Pos1})$ und $t(s=MI_{Pos2})$ möglichst groß wird und so die Bestimmung des Viskositätsindexes $VI_L$ möglichst genau wird, sollte der Integrationsbeginn $t(s=MI_{Pos1})$ möglichst klein, d. h. $s=MI_{Pos1}$ möglichst groß gewählt werden. Andererseits sollte ein Mindestwert $t(s=MI_{Pos1})$ nicht unterschritten werden, damit Anfahr- und Beschleunigungsvorgänge der Schnecke und hieraus resultierende Kompressionseffekte und Einschwingvorgänge innerhalb der Schmelze den Viskositätsindex $VI_L$ nicht negativ beeinflussen. Um diesen Zielkonflikt zu lösen, hat es sich bewährt, den Wert $s=MI_{Pos1}$ wie folgt zu bestimmen.

Sobald die Schnecke, die in der Steuerung der Spritzgießmaschine eingestellte Geschwindigkeit v(t) in einer ersten Stufe des eingestellten Geschwindigkeitsprofils erreicht hat, wird diese Schneckenposition $s=x_v$ gespeichert. Von dieser Position $s=x_v$ wird als Sicherheitsabstand ein maximaler Kompressionsweg $\Delta x_{vComp}$ abgezogen. Der Sicherheitsabstand $\Delta x_{vcomp}$ ist dabei derart gewählt, dass Einschwingvorgänge oder Kompressionsvorgänge innerhalb der Schmelze sicher abgeklungen sind. Ab dieser Position ist in ausreichendem Maß sichergestellt, dass die Fließzahl $F_{ZEL}$ mit ausreichender Genauigkeit bestimmt werden kann. Somit ergibt sich also die erste Integrationsgrenze bei der Bestimmung des Viskositätsindexes zu $t(s=MI_{Pos1}) = t(s=x_v-\Delta x_{vComp})$.

Zum sinnvollen Erhalt der oberen Integrationsgrenze $t(s=MI_{Pos2})$ bei der Bestimmung des Viskositätsindexes $VI_L$ ist es notwendig, die Schneckenposition $s=MI_{Pos2}$ geeignet zu ermitteln. Eine geeignete Methode hierzu geht zunächst von der Position $s=COP_L$ des Umschaltpunkts $COP_L$ im Lernspritzgießzyklus aus. Dabei ist die Position $s=COP_L$ kleiner als die Position $s=MI_{Pos2}$. Die Erfindung basiert u.a. darauf, nach der Ermittlung des Viskositätsindexes $VI_P$ in einem Produktionszyklus noch einen genügend großen Rest der Einspritzphase EP zur Verfügung zu haben, um in Abhängigkeit des in der Einspritzphase EP ermittelten Viskositätsindexes $VI_P$ noch in ausreichendem Maße Einfluss auf den Füllindex $FI_P$ derselben Einspritzphase EP nehmen zu können. Dabei benötigt man eine gewisse Zeit ab dem Abschluss des Integrals zur Ermittlung des Viskositätsindexes $VI_P$, um den erforderlichen Füllindex $FI_P$ zu berechnen. Diese Rechenzeit $t_{RZ}$ beträgt wenige Millisekunden und ergibt zusammen mit dem in dieser Zeit zurückgelegten Weg der Schnecke eine bestimmte Rechenstrecke $\Delta s=V_{MI}*t_{RZ}$.

Des Weiteren wird erfindungsgemäß die Anpassung des Füllindex $FI_P$ u.a. durch eine Verlagerung des Umschaltpunktes $COP_P$ hin zu größeren oder kleineren Schneckenpositionen s bewerkstelligt. Eine solche maximal mögliche Verlagerung des Umschaltpunktes $COP_P$ hin zu größeren Schneckenpositionen s sei mit $\Delta s_{max}$ bezeichnet, so dass es sich als zweckmäßig erwiesen hat, die Schneckenposition $s=MI_{Pos2}$ der oberen Integrationsgrenze zu $s=MI_{Pos2}>COP_L+v_{MI}*t_{RZ}+\Delta smax$ zu wählen.

Diese im Lernspritzgießzyklus während der Einspritzphase EL einmal festgelegte Integrationsspanne, zwischen dem Startzeitpunkt $t(s=MI_{Pos1})$ und dem Endzeitpunkt $t(s=MI_{Pos2})$ wird bezogen auf die zugehörigen Schneckenpositionen s als Messintervall $MI=MI_{Pos1} - MI_{Pos2}$ bezeichnet. Dieses in der Lernphase ermittelte Messintervall MI wird dann für die nachfolgenden Produktionsspritzgießzyklen in seiner Größe beibehalten.

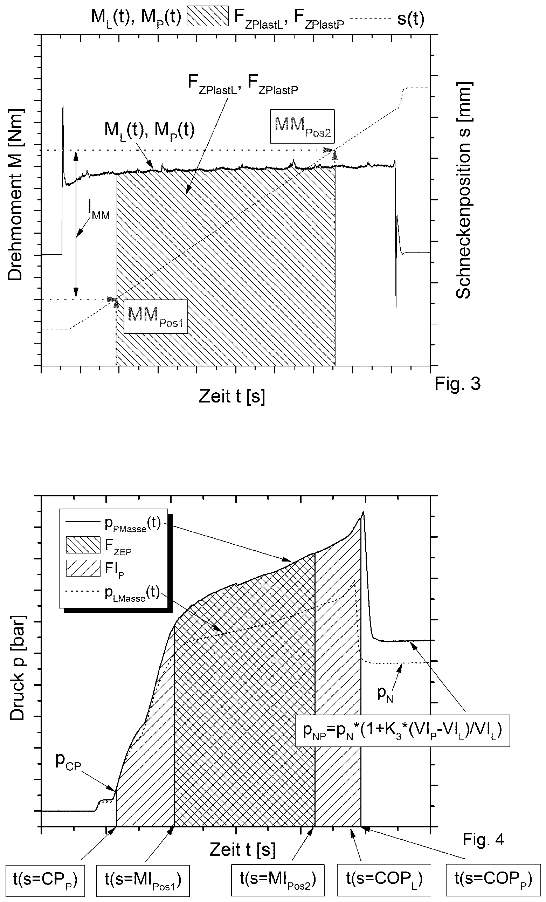

Eine alternative Möglichkeit zur Bestimmung des Viskositätsindexes $VI_L$ im Lernspritzgießzyklus oder analog des Viskositätsindexes $VI_P$ im Produktionsspritzgießzyklus wird anhand von Figur 3 erläutert. In Figur 3 ist ein typischer Momentenverlauf $M_L(t)$ einer Plastifizierschnecke im Lernspritzgießzyklus dargestellt. Ein solcher typischer Verlauf tritt auch im Produktionsspritzgießzyklus als $M_P(t)$ auf. Die Verläufe $M_L(t)$ und $M_P(t)$ zeigen dabei einen Drehmomentverlauf einer Plastifizierschnecke während einer Plastifizierphase PP. Es hat sich herausgestellt, dass auch die Plastifizierphase PP geeignet ist, um einen Viskositätsindex $VI_L$ oder $VI_P$ der Schmelze zu ermitteln. Hierzu wird zunächst eine Fließzahl $F_{ZPlastL}$ als Integral über dem Antriebsmoment $M_L(t)$ in Abhängigkeit von der Zeit in den Grenzen von $t(s=MM_{Pos1})$ bis $t(s=MM_{Pos2})$ gebildet. Diese Fließzahl $F_{ZPlastL}$ wird über die Länge $l_{MM} = MM_{Pos2} - MM_{Pos1}$ normiert und gegebenenfalls mit einer Korrekturkonstante $K_2$ zur Skalierung multipliziert. Dabei werden die Integrationsgrenzen $MM_{Pos1}$ und $MM_{Pos2}$ derart gelegt, dass zum einen ein ausreichend großer Abstand zwischen diesen Positionen herrscht, um den Viskositätsindex $VI_L$; $VI_p$ mit ausreichender Genauigkeit zu bestimmen. Andererseits sollen die Positionen $MM_{Pos1}$ und $MM_{Pos2}$ ausreichend weit von Einschwing- bzw. Abschwingvorgängen beim Anlaufen und beim Abbremsen der Plastifizierschnecke entfernt sein. Ein einmal im Lernspritzgießzyklus festgelegter Integrationsbereich zwischen den Positionen $MM_{Pos1}$ und $MM_{Pos2}$ respektive der zugehörigen Zeiten $t(s= MM_{Pos1})$ und $t(s= MM_{Pos2})$ wird auch in den späteren Produktionsspritzgießzyklen beibehalten. Als relevante Plastifizierphase PP wird z. B. diejenige Plastifizierphase PP betrachtet, bei der die Schmelze für eine nachfolgende Einspritzphase EP aufbereitet wird. Mit dem in der Plastifizierphase PP ermittelten Viskositätsindex $VI_L$ und dem in der nachfolgenden Einspritzphase EL ermittelten Füllindex $FI_L$ kann erfindungsgemäß wiederum nach der Gleichung $MPV_{eq}=FI_L/VI_L$ der Wert für das Formteil-Volumen-Äquivalent $MPV_{eq}$ ermittelt werden.

Lediglich klarstellend sei angemerkt, dass für den Fall, dass im Lernspritzgießzyklus der Viskositätsindex $VI_L$ während der Einspritzphase EL ermittelt wird, wie es in Figur 2 dargestellt ist, selbstverständlich auch in den nachfolgenden Produktionsspritzgießzyklen der Viskositätsindex $VI_P$ ebenfalls in der Einspritzphase EP des Produktionsspritzgießzyklus ermittelt wird. Wenn der Viskositätsindex $VI_L$ im Lernspritzgießzyklus während der Plastifizierphase PP ermittelt wird, wird auch in den nachfolgenden Produktionsspritzgießzyklen der Viskositätsindex $VI_P$ ebenfalls während der Plastifizierphase PP ermittelt.

Während der Lernphase, d. h. während der Herstellung zumindest eines Gutteiles wurden somit anhand des Gutteilspritzgießzyklus nachfolgend aufgelistete Werte gelernt:

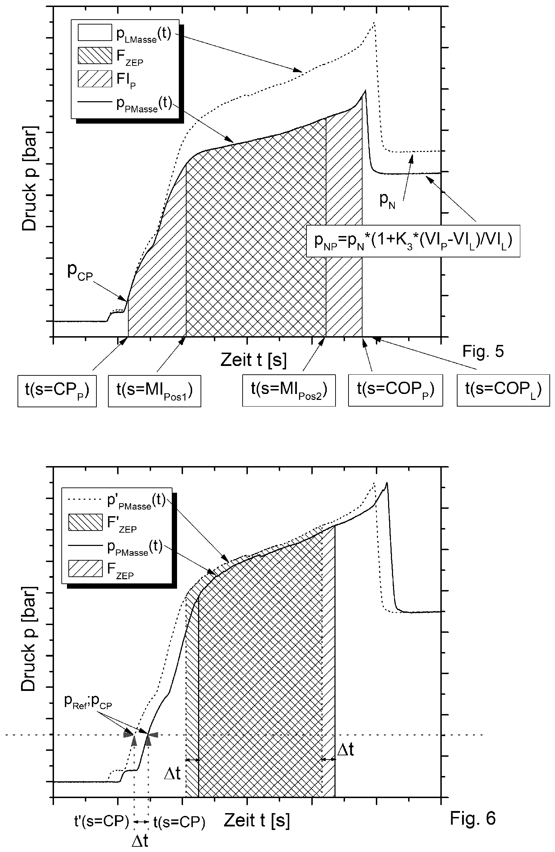

a) Der Wert für das Formteil-Volumen-Äquivalent $MPV_{eq}$,
b) Der Wert für das Messintervall $MI=MI_{Pos1}- MI_{Pos2}$, innerhalb dem die Fließzahl $F_{ZEL}$ ermittelt wurde. Die Größe dieses Messintervalls MI wird auch für die nachfolgenden Produktionszyklen zugrunde gelegt.
c) Weiterhin wird der in der Lernphase festgelegte Druckwert $p_{CP}$ ebenfalls in die Produktionsphase übernommen. Analog zur Lernphase wird in der Produktionsphase bei der Bestimmung des Füllindexes $FI_P$ in der Produktionsphase als untere Integrationsgrenze derjenige Zeitpunkt $t(s=CP_P)$ verwendet, bei dem der Druckverlauf $p_{PMasse}(t)$ den vorbestimmten oder ermittelten Druckwert $p_{CP}$ durchschreitet.
d) Für den Fall, dass der Viskositätsindex $VI_L$ während der Einspritzphase EL ermittelt wurde, werden zusätzlich die Werte der Schneckenposition $s=MI_{Pos1}$ und $s=MI_{Pos2}$ übernommen und gegebenenfalls hinsichtlich ihrer absoluten Werte angepasst, wie z. B. weiter unten anhand von Figur 6 erläutert wird.
e) Für den Fall, dass der Viskositätsindex $VI_L$ während der Plastifizierphase PL ermittelt wurde, werden die Werte der Schneckenpositionen $s=MM_{Pos1}$ und $s=MM_{Pos2}$ übernommen.
f) Sofern in der Lernphase Konstanten $K_1\neq1$ und $K_2\neq1$ verwendet wurden, werden auch diese Konstanten $K_1$ und $K_2$ in die Produktionsphase übernommen.

Im Folgenden wird die Produktionsphase des erfindungsgemäßen Verfahrens anhand der Figuren 4 bis 6 erläutert. Figur 4 zeigt ein Diagramm, in dem der Massedruck $p_{pMasse}(t)$ über der Zeit t aufgetragen ist. Eine durchgezogene Linie zeigt den Massedruckverlauf $p_{PMasse}(t)$ eines Materials im Produktionsspritzgießzyklus. Des Weiteren ist gepunktet zum Vergleich der Massedruckverlauf $p_{LMasse}(t)$, wie er im Lernspritzgießzyklus aufgenommen wurde, dargestellt. Des Weiteren ist die Einspritzphase EP und ein Stück der Nachdruckphase NP dargestellt. Das Niveau des Druckverlaufes $p_{PMasse}(t)$ ist innerhalb der Integrationsgrenzen $t(s=MI_{Pos1})$ und $t(s=MI_{Pos2})$ gegenüber dem Druckverlauf $p_{LMasse}(t)$ innerhalb dieser Grenzen deutlich erhöht. Hieraus resultiert somit ein größerer Wert für die Fließzahl $F_{ZEP}$, wenn das Integral über den Druckverlauf $p_{PMasse}(t)$ innerhalb der Grenzen $t(s=MI_{Pos1})$ und $t(s=M_{IPos2})$ ermittelt wird. Hieraus lässt sich analog zur Lernphase unter Verwendung der Konstante $K_1$ und der mittleren Geschwindigkeit $v_{MI}$ der Viskositätsindex $VI_P$ des Materials bestimmen. Aus dem Wert des Viskositätsindexes $VI_P$ des Materials , der spätestens zum Zeitpunkt $t(s=MI_{Pos2})$ feststeht, kann nunmehr unter Anwendung der Gleichung $FI_P=MPV_{eq}*VI_P$ ermittelt werden, welchen Wert der Füllindex $FI_P$ für das Material erreichen muss, um eine volumetrisch korrekte Formfüllung zu erreichen und somit auch mit dem Material des Produktionsspritzgießzyklus, welches einen vom Material aus der Lernphase unterschiedlichen Viskositätsindex $VI_P$ besitzt, ein Gutteil zu erhalten. Dies gelingt, indem das zeitlich vom Zeitpunkt $t(s=CP_P)$ laufende Integral zur Ermittlung des Füllindexes $FI_P$ des Materials laufend ermittelt wird und sobald der Viskositätsindex $VI_P$ bekannt ist, der erforderliche Füllindex $FI_P$ ermittelt wird. Erreicht das laufende Integral zur Ermittlung des aktuellen Füllindex $FI_P$ den Wert des erforderlichen Füllindex $FI_P$, so erfolgt die Umschaltung in die Nachdruckphase NP.

Bei einem zähflüssigeren Material liegt der Umschaltpunkt $COP_P$ z. B. zeitlich nach dem Umschaltpunkt $t(s=COP_L)$. Mit der Erfindung gelingt es, den Wert $MPV_{eq}$, der im Lernspritzgießzyklus ermittelt wurde, auch im Produktionsspritzgießzyklus bei einem Material, welches eine unterschiedliche Materialbeschaffenheit gegenüber dem Material, welches im Lernprozess verwendet wurde, hat, einzuhalten und somit eine volumetrisch korrekte Füllung der Kavität zu erreichen und somit ein Gutteil zu erzielen. Eine weitere Verbesserung der Teileequalität kann trotz schwankender Schmelzebeschaffenheit, d. h. trotz schwankendem Viskositätsindex $VI_P$ gegenüber dem im Lernprozess ermittelten Viskositätsindex $VI_L$ erreicht werden, wenn ein Nachdruck $p_{NP}$ in der Produktionsphase gegenüber einem voreingestellten Nachdruck $p_N$, der z. B. in der Lernphase gefahrene Nachdruck sein kann, angepasst wird. Dabei hat sich bewährt, den Nachdruck $p_{NP}$ in der Produktionsphase nach der Formel $p_{NP}=p_N*(1+K_3(VI_P-VI_L)/VI_L$ anzupassen, wobei K3 eine Korrekturkonstante ist. Die Korrekturkonstante $K_3$ kann dabei Werkstückeigenschaften des herzustellenden Formteiles abbilden. So ist beispielsweise die Korrekturkonstante $K_3$ bei einem besonders dünnwandigen Formteil eher kleiner anzusetzen als bei einem dickwandigeren Formteil. Dies liegt darin begründet, dass bei einem dünnwandigen Formteil die Formfüllung in der Nachdruckphase weniger effektiv ist, als bei einem dickwandigeren Formteil.

Figur 5 zeigt einen Produktionsspritzgießzyklus, bei dem ein Druckverlauf $p_{PMasse}(t)$ gegenüber einem Druckverlauf $p_{LMasse}(t)$ auf einem niedrigeren Niveau verläuft. Dies bedeutet, bei ansonsten gleichen Randbedingungen, dass das Material eine niedrige Viskosität bzw. einen niedrigeren Viskositätsindex $VI_P$ aufweist, als dasjenige Material, welches im Lernspritzgießzyklus während der Lernphase verwendet wurde. Ein Nachdruckniveau $p_{NP}$ ist für das Material des Produktionsspritzgießzyklusgegenüber dem Nachdruckniveau des Lernspritzgießzyklus oder einem voreingestellten Nachdruck $p_N$ abgesenkt. Der Zeitpunkt $t(s=COP_P)$ ist dabei gegenüber dem Zeitpunkt $t(s=COP_L)$ nach "früh" verschoben, was einer Verschiebung des Umschaltpunktes $COP_P$ hin zu einer betragsmäßig größeren Schneckenposition s für den Umschaltpunkt $(s=COP_p)$ des Materials im Produktionsspritzgießzyklus bedeutet.

Aufgrund bestimmter Effekte, z. B. aufgrund eines sich ändernden Schließverhaltens einer Rückstromsperre kann es vorkommen, dass ein Referenzdruckwert $p_{Ref}$, z. B. der Druckwert $p_{cp}$ zeitlich früher zu einem Zeitpunkt t' $(s=CP)$ durchlaufen wird (vgl. Figur 6). Hierdurch ändert sich also die untere Integrationsgrenze für die Ermittlung des Füllindexes $FI_P$, so dass es bei einer Beibehaltung der Integrationsgrenzen $t(s=MI_{Pos1})$ und $t(s=MI_{Pos2})$ zu einer Fehlberechnung des Viskositätsindexes $VI_P$ und somit des erforderlichen Füllindexes $FI_P$ kommen würde. Hierdurch kann es zu einer Produktion eines Ausschussteiles kommen. Um dies zu verhindern, ist es zweckmäßig, in einem solchen Fall, bei dem das Durchschreiten des Referenzdruckwertes $p_{Ref}$ um eine Zeitspanne $\Delta t$ Richtung "früh" oder Richtung "spät" verschoben ist, auch die Integrationsgrenzen $t(s=MI_{Pos1})$ und $t(s=MI_{Pos1})$ entsprechend um die Zeitspanne $\Delta t$ nach "früh" oder "spät" zu verlagern. Alternativ kann auch das Messintervall MI entsprechend hin zu größeren oder kleineren Schneckenpositionen verschoben werden, wobei die betragsmäßige Größe des Messintervalls MI bevorzugt gleich bleibt.

In Figur 6 ist diese Zeitverlagerung um $\Delta t$ qualitativ am Beispiel eines ansonsten hinsichtlich seiner Viskosität konstanten Materials gezeigt.

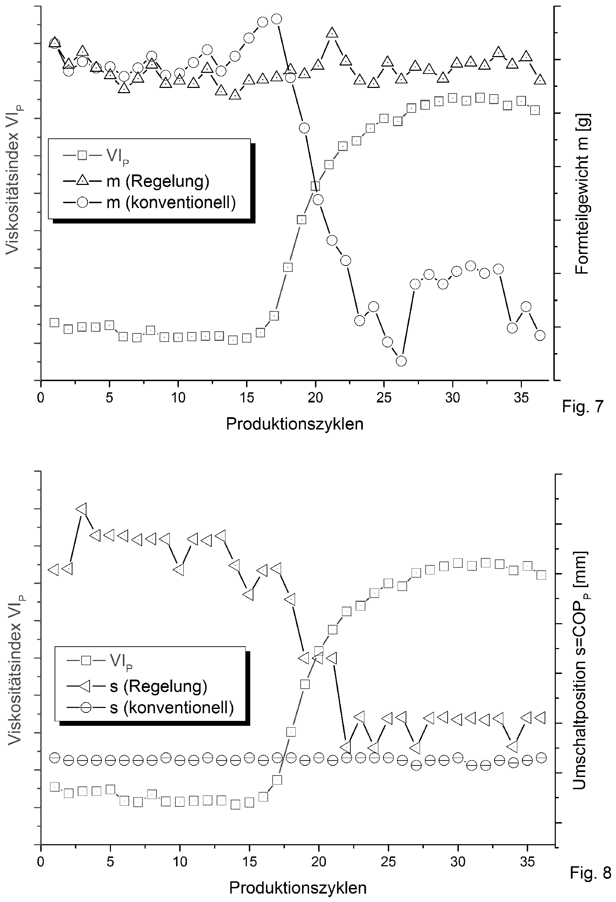

Anhand der Figur 7 wird die positive Wirkungsweise des erfindungsgemäßen Verfahrens deutlich. Figur 7 zeigt in einer ersten Kurve (offene Quadrate) über eine Vielzahl von Produktionszyklen den Verlauf des die Schmelze charakterisierenden Viskositätsindexes $VI_P$. Bei dieser beispielhaften Darstellung steigt ab dem 17. Zyklus der Viskositätsindex $VI_P$ zunächst stark an, um sich dann einem höheren Grenzwert zu nähern. Ein solcher Verlauf entspricht beispielsweise einer Abkühlung der Schmelze, woraus ein höherer Viskositätsindex $VI_P$ resultiert.

Bei konventioneller Prozessführung, dargestellt in einer zweiten Kurve (offene Kreise) hat eine derartige Änderung des Viskositätsindexes $VI_P$ mit steigendem Viskositätsindex $VI_P$ ein deutlich abfallendes Formteilgewicht zur Folge. Dies bedeutet, dass die volumetrische Füllung der Kavität nicht ausreichend war und es bei derartigen abfallenden Formteilgewichten zu Einfallstellen oder zu Unterfüllungen der Kavität kommen kann. Hierdurch entstehen somit Ausschussteile.

In einer dritten Kurve (offene Dreiecke) ist der Verlauf des Formteilgewichts unter Anwendung des erfindungsgemäßen Verfahrens dargestellt. Es wird deutlich, dass trotz ansteigendem Viskositätsindex $VI_P$ ab dem 17. Zyklus das erfindungsgemäße Verfahren in der Lage ist, das Formteilgewicht trotz sich ändernder Schmelzeeigenschaften nahezu konstant zu halten. Obwohl sich ab dem 17. Zyklus die Schmelzecharakteristik hinsichtlich ihres Viskositätsindexes $VI_P$ deutlich ändert, ist das erfindungsgemäße Verfahren in der Lage, die Formteilgewichte nahezu konstant zu halten und somit für eine volumetrisch korrekte Füllung der Kavität zu sorgen, was zur Herstellung von Gutteilen führt.

In Figur 8 ist dargestellt, wie sich die Änderung eines Viskositätsindexes $VI_P$ über eine Vielzahl von Produktionszyklen auf die Umschaltposition $s=COP_P$ bei konventioneller Prozessführung und bei einer Prozessführung gemäß der Erfindung auswirkt. In einer ersten Kurve (offene Vierecke) ist der Verlauf des Viskositätsindexes $VI_P$ über eine Vielzahl von Zyklen dargestellt. Wie bereits in Figur 7 ausgeführt, steigt der Viskositätsindex $VI_P$ ab dem 17. Zyklus deutlich an und nähert sich bis zum 35. Zyklus einem höheren Niveau an. Bei konventioneller Prozessführung (offene Kreise) wird kein Einfluss auf den Umschaltpunkt $COP_P$ genommen. Die Umschaltposition $s=COP_P$ bleibt während aller 35. Zyklen nahezu konstant. Wird das erfindungsgemäße Verfahren angewandt, wird anhand einer dritten Kurve (offene Dreiecke) deutlich, dass die Umschaltposition $s=COP_P$ korrelierend zum Ansteigen des Viskositätsindexes $VI_P$ hin zu niedrigeren Schneckenpositionen verschoben wird und ca. ab dem 26. Zyklus nahezu konstant niedrig bleibt.

Das erfindungsgemäße Verfahren ist für die Anwendung an elektro- und hydromechanischen Spritzgießmaschinen aller Baugrößen geeignet. Es ist insbesondere leicht möglich, z. B. im Rahmen einer Programmierung der Betriebssoftware einer Spritzgießmaschine, das erfindungsgemäße Verfahren bei neuen Maschinen zu integrieren. Des Weiteren fußt das erfindungsgemäße Verfahren auf Messwerten, z. B. Druckmessungen während der Einspritz- und/oder Nachdruckphase, Wegmessungen der Schnecke während der Einspritzphase, Wegmessungen und Drehmomentmessungen einer Plastifizierschnecke während einer Plastifizierphase und dergleichen, die üblicherweise bei gängigen Spritzgießmaschinen bereits gemessen werden können, so das für das erfindungsgemäße Verfahren keine zusätzliche Messsensorik oder dergleichen angebracht werden muss. Insofern eignet sich das erfindungsgemäße Verfahren auch hervorragend als Nachrüstlösung für bereits bestehende Spritzgießmaschinen.

Spritzgießmaschinen, die mit dem erfindungsgemäßen Verfahren betrieben werden, sind in der Lage, negative Effekte von beispielsweise Chargenschwankungen auf die Formteilqualität automatisiert zu kompensieren. Jedenfalls werden negative Effekte auf die Formteilqualität beim Wiederanfahren der Maschinen, z. B. nach Störungen oder nach einem gewissen Stillstand, durch die erfindungsgemäße, zustandsabhängige Prozessführung automatisiert kompensiert. Der Maschinenbediener muss weniger häufig in den Produktionsprozess eingreifen, um beispielsweise einen Parameter der Spritzgießmaschine manuell nachzuführen. Die Qualitätsunterschiede der einzelnen Formteile werden, auch bei sich ändernden Produktions- und/oder Umgebungsbedingungen auf ein Minimum reduziert.

Abhängig von den Materialeigenschaften, beispielsweise der Materialfeuchtigkeit, der Materialzusammensetzung (Chargenschwankungen) und deren Einfluss auf den Betrieb einer Spritzgießmaschine, z. B. deren Einfluss auf das Schließverhalten einer Rückstromsperre können ohne Eingriff eines Maschinenbedieners automatisiert durch das erfindungsgemäße Verfahren korrigiert werden. Hierdurch wird u. a. ein Überspritzen oder auch ein Unterfüllen der Kavitäten bei der Herstellung der Formteile verhindert. Hierdurch lassen sich erhebliche Kosteneinsparungen erzielen. Die Prozesssicherheit und der Grad der Automatisierung können erhöht werden.

Auch können mit dem erfindungsgemäßen Verfahren äußere Einflüsse, wie z. B. schwankende Umgebungstemperaturen in einer Halle, in der die Spritzgießmaschine aufgestellt ist, ausgeglichen werden. Schwankende Umgebungstemperaturen, die sich beispielsweise durch unterschiedliche Sonneneinstrahlung oder durch eine unterschiedliche Anzahl von Spritzgießmaschinen oder Anlagen, die in der Halle betrieben werden, einstellen können, führen bei fest voreingestellten Einstellungen zu minimalen Viskositätsschwankungen bei der zu verarbeitenden Schmelze. Derartige Viskositätsschwankungen haben eine negative Auswirkung auf die Formteilqualität. Mit dem erfindungsgemäßen Verfahren können derartige Änderungen der Schmelzecharakteristik, insbesondere der Viskosität erkannt werden und durch eine geänderte Prozessführung trotzdem eine sichere und vollständige Füllung der Kavität des Formwerkzeugs gewährleistet werden.

**Bezugszeichenliste**

| | |
|---|---|
| $p_{Lmasse}(t)$ | Druckverlauf im Lernspritzzyklus |
| $VI_L$ | Viskositätsindex im Lernspritzzyklus |
| EL | Einspritzphase des Lernspritzzyklus |

| | |
|---|---|
| PL | Plastifizierphase des Lernspritzzyklus |
| $FI_L$ | Füllindex des Lernspritzzyklus |
| s | Schneckenposition |
| t(s) | Zeitpunkt an dem eine bestimmte Schneckenposition s erreicht ist |
| $COP_L$ | Umschaltpunkt |
| $s=COP_L$ | Schneckenposition am Umschaltpunkt |
| $s=CP_L$ | Schneckenposition zu Beginn der Integration zur Bestimmung des Füllindexes $FI_L$ |
| $MPV_{eq}$ | Formteil-Volumen-Äquivalent |
| $p_{PMasse}(t)$ | Druckverlauf eines zum Massedruckverlauf korrelierenden Drucks während der Produktionsphase |
| $VI_P$ | Viskositätsindex während des Produktionsspritzgießzyklus |
| EP | Einspritzphase des Produktionszyklus |
| PP | Plastifizierphase des Produktionsspritzgießzyklus |
| $FI_P$ | Füllindex des Produktionsspritzgießzyklus |
| MEP | Maschineneinstellparameter |
| $F_{ZEL}$ | Fließzahl ermittelt währen der Einspritzphase im Lernspritzgießzyklus |
| $K_1$ | Korrekturkonstante |
| $v_{MI}$ | Mittelwert einer Schneckengeschwindigkeit v(t) zwischen den Schneckenpositionen $MI_{Pos1}$ und $MI_{Pos2}$ |
| $F_{ZPlastL}$ | Fließzahl einer Schmelze ermittelt während einer Plastifizierphase PL des Lernspritzgießzyklus |
| $MM_{Pos1}$ und $MM_{Pos2}$ | Schneckenpositionen s während der Plastifizierphase PL |
| $I_{MM}$ | Messintervall während der Plastifizierphase PP |
| $M_L(t)$ | Antriebsmoment während des Lernspritzgießzyklus |
| $K_2$ | Korrekturkonstante |
| MI | Messintervall während einer Einspritzphase EP; EL |
| $F_{ZEP}$ | Fließzahl ermittelt während einer Einspritzphase im Produktionsspritzgießzyklus |
| $F_{ZPlastP}$ | Fließzahl ermittelt während einer Plastifizierphase PP im Produktionsspritzgießzyklus |
| $M_P(t)$ | Momentenverlauf eines Antriebsmoment einer Plastifizierschnecke während des Produktionszyklus |
| $p_{NP}$ | angepasster Nachdruck |
| $p_N$ | voreingestellter Nachdruck |
| $K_3$ | Korrekturkonstante |
| $t_{RZ}$ | Rechenzeit |
| $\Delta s_{max}$ | maximale Verlagerung des Umschaltpunktes |
| $p_{CP}$ | voreingestellter Druckwert an der Schneckenposition $s=CP_L$ oder $s=CP_P$ |
| $p_{Ref}$ | Referenzdruck |
| $p_{RefP}$ | Referenzdruck im Produktionszyklus |
| $p_{RefL}$ | Referenzdruck im Lernzyklus |

**Patentansprüche**

1. Verfahren zur volumetrisch korrekten Füllung einer Kavität eines Formwerkzeuges mit einer Schmelze eines zu verarbeitenden Materials in einem Spritzgießprozess, wobei das Verfahren eine Lernphase und eine Produktionsphase aufweist, **dadurch gekennzeichnet, dass** in der Lernphase zumindest die nachfolgenden Schritte 1-5 und in der Produktionsphase zumindest die nachfolgenden Schritte 6-8 durchgeführt werden:

   In der Lernphase:

   1. Bereitstellen einer mit einem Formwerkzeug bestückten Spritzgießmaschine wobei die Spritzgießmaschine zur Herstellung eines Gutteils in einer Kavität des Formwerkzeuges eingerichtet ist,
   2. Durchführen mindestens eines Lernspritzgießzyklus zum Erhalt eines Gutteils und Aufnehmen eines zum Massedruckverlauf korrelierenden Druckverlaufes $p_{LMasse}(t)$
   3. Ermittlung eines Viskositätsindexes ($VI_L$), der die Schmelze des Lernspritzgießzyklus charakterisiert, während einer Einspritzphase (EL) des Lernspritzgießzyklus oder während einer dem Lernspritzgießzyklus vorangehenden Plastifizierphase (PL),
   4. Ermitteln eines Füllindexes($FI_L$) als Kennzahl für die volumetrisch korrekte Füllung der Kavität des Gutteils im Lernspritzgießzyklus, wobei gilt

$$FI_L = \int_{t(s=CP)}^{t(s=COP_L)} p_{LMasse}(t) \; dt,$$

wobei $t(s=COP_L)$ der Zeitpunkt an der Schneckenposition $(s=COP_L)$ des Umschaltpunktes $(COP_L)$ im Lernspritzgießzyklus ist und $t(s=CP_L)$ der Zeitpunkt ist, an dem die Schneckenposition $(s=CP_L)$ eine Position erreicht hat, an der ein vordefinierter Druck $p_{LMasse}(t) = p_{CP}$ vorliegtoder eine Position erreicht hat, an der die Füllung der Kavität beginnt, wobei gilt:

$$\mathrm{s{=}CP_L} \; > \; \mathrm{s{=}COP_L}$$

5. Bildung eines Formteil-Volumen-Äquivalents

$$\mathrm{MPV_{eq}} \; = \mathrm{FI_L / VI_L}$$

und in der Produktionsphase:
6. Durchführen einer Vielzahl von ProduktionsSpritzgießzyklen mit dem Formwerkzeug, Aufnehmen zumindest eines zum Massedruckverlauf korrelierenden Druckverlaufes $p_{Pmasse}(t)$ wobei ein Viskositätsindex $(VI_P)$, der die Schmelze des aktuellen Produktionsspritzgießzyklus charakterisiert, während der Einspritzphase (EP) des Produktionsspritzgießzyklus oder während einer dem Produktionsspritzgießzyklus vorangehenden Plastifizierphase (PP) ermittelt wird,
7. nach der Ermittlung des Viskositätsindexes $(VI_P)$ der erforderliche Füllindex $(FI_P)$ für den aktuellen Produktionsspritzgießzyklus aus

$$\mathrm{FI_P{=}MPV_{eq}{*}VI_P}$$

berechnet wird und
8. ein Umschaltpunkt $(COP_P)$ des Produktionsspritzgießzyklus und/oder ein Einspritzgeschwindigkeitsprofil während der verbleibenden Einspritzphase (EP) derart angepasst wird, dass gilt,

$$FI_P = \int_{t(s=CP_P)}^{t(s=COP_P)} p_{PMasse}(t) \; dt = MPVeq * VI_P$$

2. Verfahren nach Anspruch 1,
**dadurch gekennzeichnet, dass** die Ermittlung des Viskositätsindexes $(VI_L)$, der die Schmelze des Lernspritzgießzyklus charakterisiert, während der Einspritzphase (EL) des Lernspritzgießzyklus durch

$$\mathrm{VI_L{=}F_{ZEL}{*}K_1 / v_{MI}}$$

mit

$$F_{ZEL} = \int_{t(s=MI_{Pos1})}^{t(s=MI_{Pos2})} p_{LMasse}(t) \; dt$$

erfolgt, wobei $(s=MI_{Pos1})$ und $(s=MI_{Pos2})$ unterschiedliche Schneckenpositionen(s) während der Einspritzphase (EL) und $t(s=MI_{Pos1})$ und $t(s=MI_{Pos2})$ unterschiedliche Zeitpunkte (t) zu den entsprechenden Schneckenpositionen $(s=MI_{Pos1}, s=MI_{Pos2})$ sind und gilt

$$MI_{Pos1} > MI_{Pos2} > COP_L$$

und

$v_{MI}$ ein Mittelwert einer Schneckengeschwindigkeit v(t) zwischen den Schneckenpositionen ($MI_{Pos1}$) und ($MI_{Pos2}$) ist und

($K_1$) eine Korrekturkonstante zur Skalierung ist.

3. Verfahren nach Anspruch 1,
**dadurch gekennzeichnet, dass** die Ermittlung des Viskositätsindexes ($VI_L$), der die Schmelze des Lernspritzgießzyklus charakterisiert, während einer dem des Lernspritzgießzyklus vorangehenden Plastifizierphase (PL) durch

$$VI_L = F_{ZPlastL} * K_2 / l_{MM}$$

mit

$$F_{ZPlastL} = \int_{t(s=MM_{Pos1})}^{t(s=MM_{Pos2})} M_L(t) \, dt$$

erfolgt, wobei ($s=MM_{Pos1}$) und ($s=MM_{Pos2}$) unterschiedliche Schneckenpositionen (s) und $t(s=MM_{Pos1})$ und $t(s=MM_{Pos2})$ unterschiedliche Zeitpunkte (t) zu den entsprechenden Schneckenpositionen ($s=MM_{Pos1}$, $s=MM_{Pos2}$) während der Plastifizierphase (PL) sind und gilt:

$$MM_{Pos1} < MM_{Pos2}$$

und

$$l_{MM} = MM_{Pos2} - MM_{Pos1}$$

und
$M_L(t)$ ein Antriebsmoment einer Plastifizierschnecke und ($K_2$) eine Korrekturkonstante zur Skalierung ist.

4. Verfahren nach Anspruch 1,
**dadurch gekennzeichnet, dass**
die Ermittlung des Viskositätsindexes ($VI_P$), der die Schmelze des Produktionsspritzgießzyklus charakterisiert, während der Einspritzphase (EP) des Produktionsspritzgießzyklus durch

$$VI_P = F_{ZEP} * K_1 / v_{MI}$$

mit

$$F_{ZEP} = \int_{t(s=MI_{Pos1})}^{t(s=MI_{Pos2})} p_{PMasse}(t) \, dt$$

erfolgt, wobei ($s=MI_{Pos1}$) und ($s=MI_{Pos2}$) unterschiedliche Schneckenpositionen (s) und $t(s=MI_{Pos1})$ und $t(s=MI_{Pos2})$ die Zeitpunkte (t) zu den entsprechenden Schneckenpositionen ($s=MI_{Pos1}$, $s=MI_{Pos2}$) während der Einspritzphase (EP) sind und gilt:

$$MI_{Pos1} > MI_{Pos2} > COP_P$$

und

$v_{MI}$ ein Mittelwert einer Schneckengeschwindigkeit $v(t)$ zwischen den Schneckenpositionen ($MI_{Pos1}$) und ($MI_{Pos2}$) ist und

und ($K_1$) die Korrekturkonstante zur Skalierung ist.

5. Verfahren nach Anspruch 1,
**dadurch gekennzeichnet, dass**
die Ermittlung des Viskositätsindexes ($VI_P$), der die Schmelze des Produktionsspritzgießzyklus charakterisiert, während einer dem Produktionsspritzgießzyklus vorangehenden Plastifizierphase (PP) durch

$$VI_P = F_{zPlastP} * K_2 / l_{MM}$$

mit

$$F_{ZPlastP} = \int_{t(s=MM_{Pos2})}^{t(s=MM_{Pos1})} M_P(t)\ dt$$

erfolgt, wobei ($s=MM_{Pos1}$) und ($s=MM_{Pos2}$) unterschiedliche Schneckenpositionen(s) während der Plastifizierphase (PP) und $t(s=MM_{Pos1})$ und $t(s=MM_{Pos2})$ unterschiedliche Zeitpunkte (t) zu den entsprechenden Schneckenpositionen ($s=MM_{Pos1}$, $s=MM_{Pos2}$) sind und gilt:

$$MM_{Pos1} < MM_{Pos2}$$

und

$$l_{MM} = MM_{Pos2} - MM_{Pos1}$$

und
$M_P(t)$ ein Antriebsmoment einer Plastifizierschnecke und ($K_2$) die Korrekturkonstante ist.

6. Verfahren nach einem der vorangegangenen Ansprüche, **dadurch gekennzeichnet, dass**
die zum Massedruckverlauf korrelierenden Druckverläufe $p_{LMasse}(t)$, $p_{PMasse}(t)$ ein Einspritzdruckverlauf, ein Hydraulikdruckverlauf, ein Kavitätsinnendruckverlauf oder ein Massedruckverlauf sind oder aus einem Motordrehmoment eines Einspritzmotors ermittelt werden.

7. Verfahren nach einem der vorangegangenen Ansprüche, **dadurch gekennzeichnet, dass**
in einer Nachdruckphase (NP) des Produktionsspritzgießzyklus der Nachdruck ($p_{NP}$) gegenüber einem voreingestellten Nachdruck ($p_N$) verändert wird, wobei gilt $p_{NP} = p_N*(1+K_3*(VI_P-VI_L)/VI_L)$, wobei $K_3$ eine Korrekturkonstante, $VI_P$ der Viskositätsindex $VI_P$ des aktuellen Produktionsspritzgießzyklus und VIL der Viskositätsindex $VI_L$ des Lernspritzgießzyklus ist.

8. Verfahren nach einem der vorangegangenen Ansprüche,
**dadurch gekennzeichnet, dass**
die Schneckenposition ($s=MI_{Pos2}$) für den Fall, dass die Viskositätsindizes ($VI_P$) in der Einspritzphase (EP) der Spritzgießzyklen ermittelt werden, ausreichend weit vor dem Umschaltpunkt ($COP_P$) liegt, so dass nach Bestimmung des Viskositätsindex ($VI_P$) während des verbleibenden Rests der Einspritzphase (EP) bis zum Umschaltpunkt ($COP_P$)

durch Verlagerung des Umschaltpunktes ($COP_P$) oder durch Anpassung des Geschwindigkeitsprofils der Schnecke noch ausreichend Einfluss auf die Höhe des Füllindexes ($FI_P$) nehmbar ist und insbesondere gilt:

$$MI_{Pos2} > COP_L + v_{MI} * t_{RZ} + \Delta s_{max}$$

und

- $t_{RZ}$ eine Rechenzeit zur Ermittlung des Füllindex ($FI_P$) ist und
- $\Delta s_{max}$ eine betragsmäßig maximal zu erwartende örtliche Verlagerung des Umschaltpunktes ($COP_P$) gegenüber dem Umschaltpunkt ($COP_L$) ist.

9. Verfahren nach einem der vorangegangenen Ansprüche,
**dadurch gekennzeichnet, dass**
die Schneckenposition ($s=CP_L$; $s=CP_P$) aus einem fest vorgegebenen $p_{CP}$ Wert ermittelt wird oder eine Schneckenposition ($s$) ist, bei der die Rückstromsperre geschlossen ist.

10. Verfahren nach einem der vorangegangenen Ansprüche,
**dadurch gekennzeichnet, dass**
ein Messintervall ($MI=MI_{Pos1} - MI_{Pos2}$) bei einer Ermittlung des Viskositätsindexes ($VI_L$) oder ($VI_P$) in Abhängigkeit des Schließverhaltens der Rückstromsperre verschoben wird.

11. Verfahren nach einem der vorangegangenen Ansprüche,
**dadurch gekennzeichnet, dass**
das Messintervall ($MI=MI_{Pos1} - MI_{Pos2}$) hin zu größeren Schneckenpositionen ($s$) verschoben wird, wenn ein vorbestimmter Referenzdruck ($p_{Ref}$) im Produktionszyklus örtlich früher durchschritten wird als im Lernzyklus, d. h., das gilt:

$$s(p_{RefP}) > s(p_{RefL})$$

oder dass
das Messintervall ($MI=MI_{Pos1} - MI_{Pos2}$) hin zu kleineren Schneckenpositionen ($s$) verschoben wird, wenn ein vorbestimmter Referenzdruck ($p_{Ref}$) im Produktionszyklus örtlich später durchschritten wird als im Lernzyklus, d. h., das gilt:

$$s(p_{RefP}) < s(p_{RefL}).$$

12. Verfahren nach einem der vorangegangenen Ansprüche,
**dadurch gekennzeichnet, dass**
der Referenzdruck ($p_{Ref}$) derart gewählt wird, dass er kleiner ist, als derjenige Druck, der an der Position ($s=MI_{Pos1}$) vorliegt.

13. Verfahren nach einem der vorangegangenen Ansprüche,
**dadurch gekennzeichnet, dass**
der Viskositätsindex ($VI_P$) über die Schmelzetemperatur, z. B. über die Zylindertemperatur, den Staudruck oder der Plastifizierdrehzahl angepasst wird.

14. Verfahren nach einem der vorangegangenen Ansprüche,
**dadurch gekennzeichnet, dass**
die Lernphase zur Ermittlung des Formteilvolumenäquivalents ($MPV_{EQ}$) auf einer ersten Spritzgießmaschine durchgeführt wird und unter Übernahme des Wertes zumindest für das Formteil-Volumenäquivalent ($MPV_{EQ}$) in eine Steuerung einer zweiten Spritzgießmaschine die Produktionsphase des Verfahrens nach einem Formteilwerkzeugwechsel von der ersten Spritzgießmaschine auf die zweite Spritzgießmaschine mit der zweiten Spritzgießmaschine durchgeführt wird.

15. Verfahren nach einem der vorangegangenen Ansprüche,
**dadurch gekennzeichnet, dass**

das Verfahren bei Präge-, Schäum- und Mehrkomponentenprozessen angewendet wird.

**Claims**

1. A method for the volumetrically correct filling of a cavity of a mould with a melt of a material to be processed in an injection-moulding process, wherein the method has a learning phase and a production phase, **characterized in that** at least the following steps 1-5 are carried out in the learning phase and at least the following steps 6-8 are carried out in the production phase:

   In the learning phase:

      1. Provision of an injection moulding machine equipped with a mould, wherein the injection moulding machine is set up for producing a good part in a cavity of the mould,
      2. Carrying out at least one learning injection-moulding cycle to obtain a good part and recording a pressure curve $p_{LMass}(t)$ correlating to the mass pressure curve
      3. Determining a viscosity index ($VI_L$), which characterises the melt of the learning injection-moulding cycle, during an injection phase (EL) of the learning injection-moulding cycle or during a plasticisation phase (PL) preceding the learning injection-moulding cycle,
      4. Determining a filling index ($FI_L$) as an index for the volumetrically correct filling of the cavity of the good part in the learning injection-moulding cycle, wherein the following is true

$$FI_L = \int_{t(s=CP_L)}^{t(s=COP_L)} p_{LMass}(t) \; dt$$

      where $t(s=COP_L)$ is the time at the screw position ($s=COP_L$) of the changeover point ($COP_L$) in the learning injection-moulding cycle and $t(s=CP_L)$ is the time at which the screw position ($s=CP_L$) has reached a position at which a predefined pressure $p_{LMass}(t) = p_{CP}$ is applied, or has reached a position at which the filling of the cavity begins, wherein the following is true:

$$s{=}CP_L > s{=}COP_L$$

      5. Formation of a moulded-part volume equivalent

$$MPV_{eq}{=}FI_L/VI_L$$

      and in the production phase:
      6. Carrying out a multiplicity of production injection-moulding cycles using the mould, recording at least one pressure curve $p_{PMass}(t)$ correlating to the mass pressure curve, wherein a viscosity index ($VI_P$), which characterises the melt of the current production injection-moulding cycle, is determined during the injection phase (EP) of the production injection-moulding cycle or during a plasticisation phase (PP) preceding the production injection-moulding cycle,
      7. after the determination of the viscosity index ($VI_P$), the required filling index ($FI_P$) for the current production injection-moulding cycle is calculated from

$$FI_P{=}MPV_{eq}{*}VI_P$$

      and
      8. a changeover point ($COP_P$) of the production injection-moulding cycle and/or an injection rate profile is adjusted in such a manner during the remaining injection phase (EP) that the following is true,

$$FI_P = \int_{t(s=CP_P)}^{t(s=COP_P)} p_{PMass}(t) \; dt = MPV_{eq} * VI_P$$

2. The method according to Claim 1,
   **characterised in that**
   the determination of the viscosity index ($VI_L$), which characterises the melt of the learning injection-moulding cycle, takes place during the injection phase (EL) of the learning injection-moulding cycle by means of

$$VI_L = F_{ZEL} * K_1 / V_{MI}$$

with

$$F_{ZEL} = \int_{t(s=MI_{Pos1})}^{t(s=MI_{Pos2})} p_{LMass}(t) \; dt$$

where ($s=MI_{Pos1}$) and ($s=MI_{Pos2}$) are different screw positions (s) during the injection phase (EL) and $t(s=MI_{Pos1})$ and $t(s=MI_{Pos2})$ are different times (t) for the corresponding screw positions ($s=MI_{Pos1}$, $s=MI_{Pos2}$) and the following is true

$$MI_{Pos1} > MI_{Pos2} > COP_L$$

and
$V_{MI}$ is an average value of a screw speed v(t) between the screw positions ($MI_{Pos1}$) and ($MI_{Pos2}$)
and
($K_1$) is a correction constant for scaling.

3. The method according to Claim 1,
   **characterised in that**
   the determination of the viscosity index ($VI_L$), which characterises the melt of the learning injection-moulding cycle, takes place during a plasticisation phase (PL) preceding the learning injection-moulding cycle by means of

$$VI_L - F_{ZPlastL} * K_2 / I_{MM}$$

with

$$F_{ZPlastL} = \int_{t(s=MM_{Pos1})}^{t(s=MM_{Pos2})} M_L(t) \; dt$$

where ($s=MM_{Pos1}$) and ($s=MM_{Pos2}$) are different screw positions (s) and $t(s=MM_{Pos1})$ and $t(s=MM_{Pos2})$ are different times (t) for the corresponding screw positions ($s=MM_{Pos1}$, $s=MM_{Pos2}$) during the plasticisation phase (PL) and the following is true:

$$MM_{Pos1} < MM_{Pos2}$$

and

$$I_{MM}=MM_{Pos2}-MM_{Pos1}$$

and

$M_L(t)$ is a drive moment of a plasticisation screw and ($K_2$) is a correction constant for scaling.

4. The method according to Claim 1,
   **characterised in that**
   The determination of the viscosity index ($VI_P$), which characterises the melt of the production injection-moulding cycle, takes place during the injection phase (EP) of the production injection-moulding cycle by means of

$$VI_P=F_{ZEP}*K_1/V_{MI}$$

with

$$F_{ZEP} = \int_{t(s=MI_{Pos1})}^{t(s=MI_{Pos2})} p_{PMass}(t)\ dt$$

where ($s=MI_{Pos1}$) and ($s=MI_{Pos2}$) are different screw positions (s) and $t(s=MI_{Pos1})$ and $t(s=MI_{Pos2})$ are the times (t) for the corresponding screw positions ($S=MI_{Pos1}$, $s=MI_{Pos2}$) during the injection phase (EP) and the following is true:

$$MI_{Pos1}>MI_{Pos2}>COP_P$$

and

$V_{MI}$ is an average value of a screw speed v(t) between the screw positions ($MI_{Pos1}$) and ($MI_{Pos2}$) and ($K_1$) is the correction constant for scaling.

5. The method according to Claim 1,
   **characterised in that**
   the determination of the viscosity index ($VI_P$), which characterises the melt of the production injection-moulding cycle, takes place during a plasticisation phase (PP) preceding the production injection-moulding cycle by means of

$$VI_P=F_{ZPlastP}*K_2/I_{MM}$$

with

$$F_{ZPlastP} = \int_{t(s=MM_{Pos2})}^{t(s=MM_{Pos1})} M_P(t)\ dt$$

where ($s=MM_{Pos1}$) and ($s=MM_{Pos2}$) are different screw positions (s) during the plasticisation phase (PP) and $t(s=MM_{Pos1})$ and $t(s=MM_{Pos2})$ are different times (t) for the corresponding screw positions ($s=MM_{Pos1}$, $s=MM_{Pos2}$) and the following is true:

$$MM_{Pos1}<MM_{Pos2}$$

and

$$I_{MM} = MM_{Pos2} - MM_{Pos1}$$

and

$M_P(t)$ is a drive moment of a plasticisation screw and ($K_2$) is the correction constant.

6. The method according to one of the preceding claims,
**characterised in that**
the pressure curves $p_{LMass}(t)$ and $p_{PMass}(t)$ correlating to the mass pressure curve are an injection pressure curve, a hydraulic pressure curve, a cavity internal pressure curve or a mass pressure curve or are determined from a motor torque of an injection motor.

7. The method according to one of the preceding claims,
**characterised in that**
in a holding-pressure phase (NP) of the production injection-moulding cycle, the holding pressure ($p_{NP}$) is changed with respect to a pre-set holding pressure $p_N$), wherein the following is true $p_{NP}=p_N*(1+K_3*(VI_P-VI_L)/VI_L)$, wherein $K_3$ is a correction constant, $VI_P$ is the viscosity index $VI_P$ of the current production injection-moulding cycle and $VI_L$ is the viscosity index $VI_L$ of the learning injection-moulding cycle.

8. The method according to one of the preceding claims,
**characterised in that**
the screw position ($s=MI_{Pos2}$) is located sufficiently far upstream of the changeover point ($COP_P$) for the case that the viscosity indices ($VI_P$) are determined in the injection phase (EP) of the injection-moulding cycles, so that after determining the viscosity index ($VI_P$), it is possible during the remaining remainder of the injection phase (EP) up to the changeover point (COPp), by displacement of the changeover point ($COP_P$) or by adjusting the speed profile of the screw to still have sufficient influence on the height of the filling index ($FI_P$), and in particular the following is true:

$$MI_{Pos2} > COP_L + V_{MI} * t_{RZ} + \Delta s_{max}$$

and

- $t_{RZ}$ is a calculation time for determining the filling index ($FI_P$) and
- $\Delta s_{max}$ is a maximum expected local displacement of the changeover point ($COP_P$) compared to the changeover point ($COP_L$).

9. The method according to one of the preceding claims,
**characterised in that**
the screw position ($s=CP_L$; $s=CP_P$) is determined from a fixedly predetermined $p_{CP}$ value or is a screw position (s), at which the non-return valve is closed.

10. The method according to one of the preceding claims,
**characterised in that**
a measurement interval ($MI=MI_{Pos1}-MI_{Pos2}$) is displaced during determination of the viscosity index ($VI_L$) or ($VI_P$) as a function of the closing behaviour of the non-return valve.

11. The method according to one of the preceding claims,
**characterised in that**
the measurement interval ($MI=MI_{Pos1}-MI_{Pos2}$) is displaced to larger screw positions (s) if a predetermined reference pressure ($p_{Ref}$) is locally passed through earlier in the production cycle than in the learning cycle, i.e. the following is true:

$$s(p_{RefP}) > s(p_{RefL})$$

or **in that**

the measurement interval (MI=MI$_{Pos1}$-MI$_{Pos2}$) is displaced to smaller screw positions (s) if a predetermined reference pressure (p$_{Ref}$) is locally passed through later in the production cycle than in the learning cycle, i.e. the following is true:

$$s(p_{RefP}) < s(p_{RefL}).$$

12. The method according to one of the preceding claims,
**characterised in that**
the reference pressure (p$_{Ref}$) is chosen in such a manner that it is smaller than the pressure applied at the position (s=MI$_{Pos1}$).

13. The method according to one of the preceding claims,
**characterised in that**
the viscosity index (VI$_P$) is adjusted by means of the melting temperature, e.g. by means of the cylinder temperature, the back pressure or the plasticisation speed.

14. The method according to one of the preceding claims,
**characterised in that**
the learning phase for determining the moulded-part volume equivalent (MPV$_{EQ}$) is carried out on a first injection moulding machine and, carrying over the value at least for the moulded-part volume equivalent (MPV$_{EQ}$) into a control of a second injection moulding machine, the production phase of the method is carried out, after a mould change from the first injection moulding machine to the second injection moulding machine, using the second injection moulding machine.

15. The method according to one of the preceding claims,
**characterised in that**
the method is used in embossing, foam and multiple-component processes.

**Revendications**

1. Procédé destiné au remplissage volumétrique correct d'une cavité d'un moule avec une fonte d'un matériau à traiter dans un procédé de moulage par injection, dans lequel le procédé comprend une phase d'apprentissage et une phase de production, **caractérisé en ce que** dans la phase d'apprentissage, au moins les étapes suivantes 1 - 5 et dans la phase de production, au moins les phases suivantes 6 - 8 sont exécutées :

    dans la phase d'apprentissage :

        1. préparation d'une machine de moulage par injection dotée d'un moule, dans lequel la machine de moulage par injection est équipée pour fabriquer une pièce moulée dans une cavité du moule,
        2. exécution d'au moins un cycle de moulage par injection d'apprentissage pour obtenir une pièce moulée et enregistrement d'une allure de pression P$_{LMasse}$ (t) faisant la corrélation avec l'allure de pression de la masse,
        3. calcul d'un indice de viscosité (VI$_L$) qui caractérise la fonte du cycle de moulage par injection d'apprentissage, pendant une phase d'injection (EL) du cycle de moulage par injection d'apprentissage ou pendant une phase de plastification (PL) précédant le cycle de moulage par injection d'apprentissage,
        4. calcul d'un indice de remplissage (FI$_L$) en tant que caractéristique pour le remplissage volumétrique correct de la cavité de la pièce moulée dans le cycle de moulage par injection d'apprentissage, dans lequel vaut

$$FI_L = \int_{t(s=CP_L)}^{t(s=COP_L)} p_{LMass}(t)\ dt$$

dans lequel t(s=COP$_L$) est le moment à la position de la vis sans fin (s=COP$_L$) du point de bascule ( COP$_L$) dans le cycle de moulage par injection d'apprentissage et t(s=CP$_L$) est le moment auquel la position de la vis sans fin (s=CP$_L$) a atteint une position à laquelle une pression prédéfinie $P_{LMasse}$ (t) = $P_{CP}$ est présente ou a atteint une position à laquelle le remplissage de la cavité commence, dans lequel vaut :

$$s{=}CP_L \, _{>} \, s{=}COP_L$$

5. Formation d'un équivalent volumique de la pièce moulée

$$MPV_{eq} \; = \; FI_L/VI_L$$

et dans la phase de production :

6. exécution d'une pluralité de cycles de moulage par injection de production avec le moule, enregistrement d'au moins une allure de pression $P_{pmasse}$ (t) faisant la corrélation avec l'allure de pression de la masse dans lequel un indice de viscosité (VI$_P$) qui caractérise la fonte du cycle de moulage par injection de production actuel, est calculé pendant la phase d'injection (EP) du cycle de moulage par injection de production ou pendant une phase de plastification (PP) précédant le cycle de moulage par injection de production,

7. après le calcul de l'indice de viscosité (VI$_P$), l'indice de remplissage (FI$_P$) nécessaire pour le cycle de moulage par injection de production actuel est calculé à partir de

$$FI_P \; = \; MPV_{eq}{*} \; VI_P$$

Et

8. un point de bascule (COP$_P$) du cycle de moulage par injection de production et/ou un profil de vitesse d'injection est ainsi adapté pendant la phase d'injection (EP) restante que vaut

$$FI_P \; = \; \int_{t(s=CP_P)}^{t(s=COP_P)} p_{PMass}(t) \; dt \; = \; MPV_{eq} * VI_P$$

**2.** Procédé selon la revendication 1,
**caractérisé en ce que**
le calcul de l'indice de viscosité (VI$_L$) qui caractérise la fonte du cycle de moulage par injection d'apprentissage a lieu pendant la phase d'injection (EL) du cycle de moulage par injection d'apprentissage par

$$VI_L \; = \; F_{ZEL}{*}K_1/V_{MI}$$

avec

$$F_{ZEL} \; = \; \int_{t(s=MI_{Pos1})}^{t(s=MI_{Pos2})} p_{LMass}(t) \; dt$$

dans lequel (s=MI$_{pos1}$) et (s=MI$_{pos2}$) sont différentes positions de la vis sans fin (s) pendant la phase d'injection (EL) et t(s=MI$_{pos1}$) et t(s=MI$_{pos2}$) sont différents moments (t) par rapport aux positions de vis sans fin correspondantes (s=MI$_{pos1}$, s=MI$_{pos2}$) et vaut

$$MI_{pos1} > MI_{pos2} > COP_L$$

et

$V_{MI}$ est une valeur médiane d'une vitesse de la vis sans fin v(t) entre les positions de vis sans fin ($MI_{pos1}$) et ($MI_{pos2}$) et

($K_1$) est une constante de correction pour la mise à l'échelle.

3. Procédé selon la revendication 1,
**caractérisé en ce que**
le calcul de l'indice de viscosité ($VI_L$) qui caractérise la fonte du cycle de moulage par injection d'apprentissage a lieu pendant une phase de plastification (PL) précédant le cycle de moulage par injection d'apprentissage par

$$VI_L = F_{ZPlastL} * K_2 / 1_{MM}$$

avec

$$F_{ZPlastL} = \int_{t(s=MM_{Pos1})}^{t(s=MM_{Pos2})} M_L(t) \, dt$$

dans lequel ($s = Mm_{pos1}$) et ($s = Mm_{pos2}$) sont différentes positions de la vis sans fin (s) et $t(s = Mm_{pos1})$ et $t(s = Mm_{pos2})$ sont différents moments (t) par rapport aux positions de vis sans fin correspondantes ($s = Mm_{pos1}$, $s = Mm_{pos2}$) pendant la phase de plastification (PL) et vaut :

$$MM_{pos1} < MM_{pos2}$$

et

$$1_{MM} = MM_{pos2} - MM_{pos1}$$

et
$M_L(t)$ est un couple d'entraînement d'une vis de plastification et ($K_2$) est une constante de correction pour la mise à l'échelle.

4. Procédé selon la revendication 1,
**caractérisé en ce que**
le calcul de l'indice de viscosité ($VI_P$) qui caractérise la fonte du cycle de moulage par injection de production a lieu pendant la phase d'injection (EP) du cycle de moulage par injection de production par

$$VI_P = F_{ZEP} * K_1 / V_{MI}$$

avec

$$F_{ZEP} = \int_{t(s=MI_{Pos1})}^{t(s=MI_{Pos2})} p_{PMass}(t) \, dt$$

dans lequel ($s = MI_{pos1}$) et ($s = MI_{pos2}$) sont différentes positions de la vis sans fin (s) et $t(s = MI_{pos1})$ et $t(s = MI_{pos2})$ sont

les moments (t) par rapport aux positions de vis sans fin correspondantes (s=MIp$_{os1}$ s=MI$_{pos2}$) pendant la phase d'injection (EP) et vaut

$$MI_{pos1} > MI_{pos2} > COP_P$$

et

$V_{MI}$ est une valeur médiane d'une vitesse de la vis sans fin v(t) entre les positions de vis sans fin (MI$_{pos1}$) et (MI$_{pos2}$) et (K$_1$) est la constante de correction pour la mise à l'échelle.

5. Procédé selon la revendication 1,
   **caractérisé en ce que**
   le calcul de l'indice de viscosité (VI$_P$) qui caractérise la fonte du cycle de moulage par injection de production a lieu pendant une phase de plastification (PP) précédant le cycle de moulage par injection de production par

$$VI_P = F_{ZPlastP} * K_2 / l_{MM}$$

avec

$$F_{ZPlastP} = \int_{t(s=MM_{POS2})}^{t(s=MM_{POS1})} M_P(t)\ dt$$

dans lequel (s=MM$_{pos1}$) et (s=MM$_{pos2}$) sont différentes positions de la vis sans fin (s) pendant la phase de plastification (PP) et t(s=MM$_{pos1}$) et t(s=MM$_{pos2}$) sont différents moments (t) par rapport aux positions de vis sans fin correspondantes (s=MM$_{pos1}$, s=MM$_{pos2}$) pendant la phase d'injection (EP) et vaut

$$MM_{pos1} < MM_{pos2}$$

et

$$l_{MM} = MM_{pos2} - MM_{pos1}$$

et
   MP(t) est un couple d'entraînement d'une vis de plastification et (K$_2$) est la constante de correction.

6. Procédé selon l'une des revendications précédentes,
   **caractérisé en ce que**
   les allures de pression P$_{LMasse}$ (t), P$_{PMasse}$ (t) faisant la corrélation avec l'allure de pression de la masse sont une allure de pression d'injection, une allure de pression hydraulique, une allure de pression interne de la cavité ou une allure de pression de la masse ou sont calculées à partir d'un couple de moteur d'un moteur à injection.

7. Procédé selon l'une des revendications précédentes,
   **caractérisé en ce que**
   dans une phase de maintien en pression (NP) du cycle de moulage par injection de production, le maintien en pression (P$_{NP}$) est modifié par rapport à un maintien en pression (P$_N$) réglé au préalable, dans lequel vaut P$_{NP}$ = P$_N$*(1+K$_3$*(V$_{IP}$-VI$_L$)/(VI$_L$, dans lequel K$_3$ est une constante de correction, V$_{IP}$ l'indice de viscosité VI$_P$ du cycle de moulage par injection de production actuel et V$_{IL}$ l'indice de viscosité VI$_L$ du cycle de moulage par injection d'apprentissage.

8. Procédé selon l'une des revendications précédentes,
   **caractérisé en ce que**

la position de vis sans fin (s= MI$_{pos2}$) au cas où les indices de viscosité (VI$_P$) dans la phase d'injection (EP) des cycles de moulage par injection sont calculés, est située suffisamment loin devant le point de bascule (COPp) de sorte qu'après détermination de l'indice de viscosité (VI$_P$) pendant le reste de la phase d'injection (EP) jusqu'au point de bascule (COP$_P$) par déplacement du point de bascule (COP$_P$) ou par adaptation du profilé de vitesse de la vis sans fin, on peut encore prendre suffisamment d'influence sur la hauteur de l'indice de remplissage (FI$_P$) et vaut en particulier :

$$MI_{pos2} > COP_L + V_{MI}*T_{RZ} + \Delta S_{max}$$

et

- T$_{RZ}$ est un temps de calcul pour déterminer l'indice de remplissage (FIP) et
- $\Delta S_{max}$ est un déplacement local maximale attendu en fonction de la valeur absolue, du point de bascule (COP$_P$) par rapport au point de bascule (COP$_L$).

9. Procédé selon l'une des revendications précédentes,

**caractérisé en ce que**
la position de vis sans vin (s=COP$_L$ ; s=COP$_P$) est calculée à partir d'une valeur P$_{CP}$ prédéfinie ou est une position de vis sans fin (s) à laquelle le blocage de reflux est fermé.

10. Procédé selon l'une des revendications précédentes,
**caractérisé en ce**
**qu'**un intervalle de mesure (MI= MI$_{pos1}$ - MI$_{pos2}$) lors d'un calcul de l'indice de viscosité (V$_{IL}$) ou (V$_{IP}$) est repoussé en fonction du comportement de fermeture du blocage de reflux.

11. Procédé selon l'une des revendications précédentes, **caractérisé en ce que** l'intervalle de mesure (MI= MI$_{pos1}$ - MI$_{pos2}$) est repoussé jusqu'à des plus grandes positions de vis sans fin (s) lorsqu'une pression de référence (p$_{Ref}$) prédéfinie est passée localement plus tôt dans le cycle de production que dans le cycle d'apprentissage, c'est à dire que vaut :

$$s(p_{RefP}) > S(p_{RefL})$$

ou que l'intervalle de mesure (MI= MI$_{pos1}$ - MI$_{pos2}$) est repoussé jusqu'à des plus petites positions de vis sans fin (s) lorsqu'une pression de référence (p$_{Ref}$) prédéfinie est passée localement plus tard dans le cycle de production que dans le cycle d'apprentissage, c'est à dire que vaut :

$$s(p_{RefP}) < S(p_{RefL}).$$

12. Procédé selon l'une des revendications précédentes,
**caractérisé en ce que**
la pression de référence (p$_{Ref}$) est ainsi sélectionnée qu'elle est inférieure à la pression présente à la position (s=MI$_{pos1}$).

13. Procédé selon l'une des revendications précédentes,
**caractérisé en ce que**
l'indice de viscosité (VI$_P$) est adapté par la température de fusion, par exemple par la température du cylindre, la pression dynamique ou la vitesse de plastification.

14. Procédé selon l'une des revendications précédentes,
**caractérisé en ce que**
la phase d'apprentissage pour calculer l'équivalent volumique de la pièce moulée (MPV$_{EQ}$) est exécutée sur une première machine de moulage par injection, et en reprenant la valeur au moins pour l'équivalent volumique de la pièce moulée (MPV$_{EQ}$) dans une commande d'une seconde machine de moulage par injection, la phase de production du procédé est exécutée avec la seconde machine de moulage par injection selon un changement de moule de la première machine de moulage par injection à la seconde machine de moulage par injection.

15. Procédé selon l'une des revendications précédentes,
**caractérisé en ce que**
le procédé est employé dans les procédés de marquage, de moussage et multi-composants.

Fig. 1

Fig. 2

Fig. 3

Fig. 4

$$p_{NP}=p_N*(1+K_3*(VI_P-VI_L)/VI_L)$$

Fig. 5

$t(s=CP_P)$    $t(s=MI_{Pos1})$    $t(s=MI_{Pos2})$    $t(s=COP_P)$    $t(s=COP_L)$

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2583811 A1
- DE 3524310 C1
- DE 102007061775 A1
- DE 102005032367 A1